(19) Europäisches Patentamt
European Patent Office
Office européen des brevets

(11) EP 4 475 090 A1

(12) EUROPEAN PATENT APPLICATION

(43) Date of publication:
11.12.2024 Bulletin 2024/50

(51) International Patent Classification (IPC):
G06V 10/82 (2022.01)        G06F 18/30 (2023.01)
G06V 10/25 (2022.01)        G06V 10/20 (2022.01)
G06V 10/44 (2022.01)        G06V 10/94 (2022.01)

(21) Application number: 24178059.2

(22) Date of filing: 24.05.2024

(52) Cooperative Patent Classification (CPC):
G06V 10/82; G06F 18/30; G06V 10/25;
G06V 10/255; G06V 10/454; G06V 10/955

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 GB 202308166

(71) Applicant: Imagination Technologies Limited
Kings Langley, Hertfordshire WD4 8LZ (GB)

(72) Inventor: Cabaleiro, Fabrizio
Kings Langley, WD4 8LZ (GB)

(74) Representative: Slingsby Partners LLP
1 Kingsway
London WC2B 6AN (GB)

(54) **METHODS AND SYSTEMS FOR PERFORMING SSD POST PROCESSING**

(57) Methods and systems for performing post processing on data generated by processing an image in accordance with a single-shot detector, SSD, neural network. The data comprises information identifying a plurality of bounding boxes in the image and a confidence score for a class for each bounding box of the plurality of bounding boxes. The method includes: for each bounding box of the plurality of bounding boxes: (a) determining if the confidence score for the bounding box meets a confidence score threshold, (b) in response to determining that the confidence score for the bounding box meets the confidence score threshold, determining if less than a maximum number of bounding boxes entries have been stored in memory, each bounding box entry comprising (i) information identifying a bounding box of the plurality of bounding boxes and (ii) the confidence score of the identified bounding box, (c) in response to determining that less than the maximum number of bounding box entries have been stored in memory, adding a new bounding box entry for the bounding box, (d) in response to determining that the maximum number of bounding box entries have been stored in memory, determining if the confidence score for the bounding box is greater than a lowest confidence score of the bounding box entries, and (e) in response to determining that the confidence score for the bounding box is greater than the lowest confidence score of the bounding box entries, removing the bounding box entry with the lowest confidence score, and adding a new bounding box entry for the bounding box; and once (a) to (e) have been completed for each bounding box of the plurality of bounding boxes, outputting a sorted list of the bounding box entries based on the confidence scores.

FIG. 4

**Description**

CROSS-REFERENCE TO RELATED APPLICATION

This application claims priority from UK patent application GB2308166.4 filed on 31 May 2023, which is herein incorporated by reference in its entirety.

TECHNICAL FIELD

This application is directed to methods and systems for performing single-shot detector (SSD) post processing.

BACKGROUND

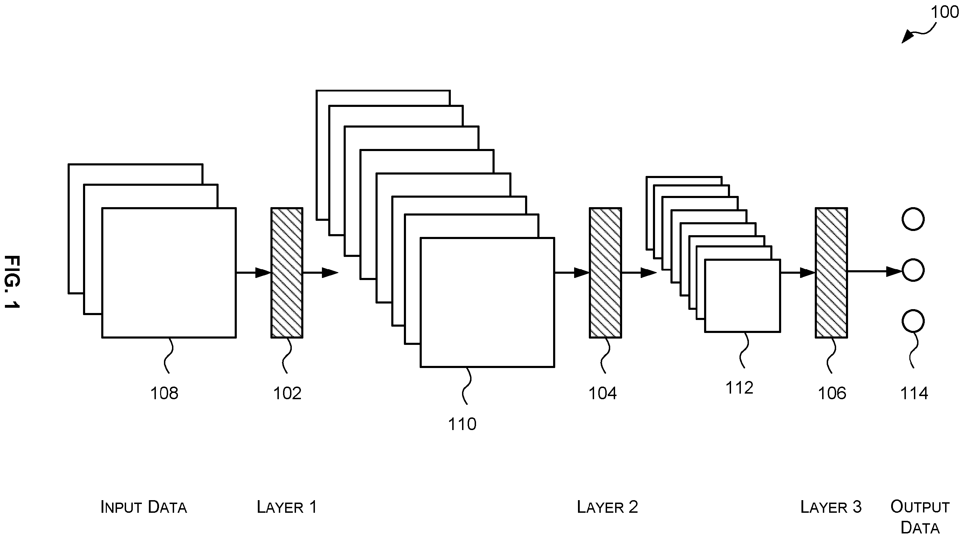

An artificial neural network, which will be referred to herein as a neural network, comprises one or more interconnected layers that can be used for machine learning applications. In particular, a neural network can be used in signal processing applications, including, but not limited to, image processing and computer vision applications. FIG. 1 illustrates an example neural network 100 that comprises a plurality of layers 102, 104, 106. Each layer 102, 104, 106 receives input data, and processes the input data in accordance with the layer to produce output data. The output data is either provided to another layer as the input data or is output as the final output data of the neural network. For example, in the neural network 100 of FIG. 1, the first layer 102 receives the original input data 108 to the neural network 100 and processes the input data in accordance with the first layer 102 to produce output data 110. The output data 110 of the first layer 102 becomes the input data to the second layer 104, and the second layer 104 processes the input data 110 in accordance with the second layer 104 to produce output data 112. The output data 112 of the second layer 104 becomes the input data to the third layer 106, and the third layer 106 processes the input data 112 in accordance with the third layer 106 to produce output data 114. The output data 114 of the third layer 106 is then output as the final output data of the neural network. Where the neural network is used for classification, the final output data may be a vector of length A, wherein A is the number of classes and each value in the vector represents the probability of a certain class.

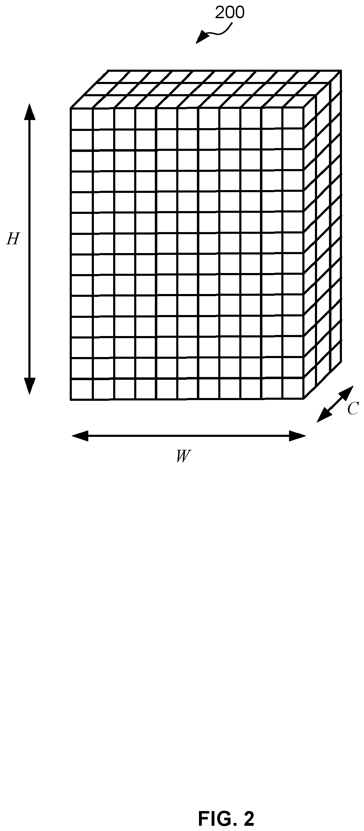

The data input to and output from a layer of a neural network can be described as a tensor. As is known to those of skill in the art, a tensor is a generalization of vectors and matrices and can be considered as an n-dimensional array. A vector is a one-dimensional tensor, and a matrix is a two-dimensional tensor. The tensors in a neural network are often, but are not necessarily, four-dimensional. Reference is made to FIG. 2 which illustrates an example four-dimensional (4D) tensor 200 in which one dimension (e.g. corresponding to the batch size) has been suppressed for visualisation purposes. The 4D tensor 200 may be described as comprising one or more 3D tensors, wherein each 3D tensor comprises C planes of data, where each plane has a dimension $W \times H$. Each plane may be referred to as a channel of the tensor. The number of 3D tensors may be referred to as the batch size. Each 3D tensor may be, for example, an image. An element of a tensor may be referred to as a tensel, akin to how an element of a picture is referred to as a pixel.

The processing that is performed on the input tensor to a layer depends on the type of layer. For example, each layer of a neural network may be one of a plurality of different types. Example neural network layer types include, but are not limited to, a convolution layer, an activation layer, a normalisation layer, a pooling layer, a fully connected layer, and a batch normalisation layer. It will be evident to a person of skill in the art that these are example neural network layer types and that this is not an exhaustive list and there may be other neural network layer types.

A convolution layer convolves the input tensor with weights associated with the layer. Specifically, each convolution layer is associated with a plurality of weights $k_1 \ldots k_g$, which may also be referred to as filter weights or coefficients. The weights are grouped to form one or more filters or kernels, and each filter may be associated with an offset bias *bias*. Each filter may have a dimension $K_w \times K_H \times C_{in}$ (i.e., each filter may comprise a set of $K_W \times K_H \times C_{in}$ weights $k$), where $C_{in}$ is the number of channels in the input tensor. Each filter may be applied to the input tensor according to a convolution operation across steps $s_W$ and $s_H$ in the $W$ and $H$ directions. The step sizes $s_W$ and $s_H$ may be referred to as the strides of the convolution. The number and dimensions of filters and/or the number of weights per filter may vary between convolution layers. A convolutional neural network (CNN), which is a specific type of neural network that is effective for image recognition and classification, generally comprises a plurality of convolution layers.

An activation layer, which often, but not necessarily, follows a convolution layer, applies one or more activation functions to the input tensor. An activation function receives an input tensor and performs a certain non-linear mathematical operation on each value or element in the input tensor. In other words, the activation function operates on each value or element in the input tensor separately. In some examples, an activation layer may act as rectified linear unit (ReLU) by implementing an ReLU function or a leaky rectified linear unit (LReLU) by implementing a LReLU function.

A normalisation layer is configured to perform a normalising function, such as a Local Response Normalisation (LRN) function on the input tensor.

A pooling layer performs a pooling function, such as a max, min or average function, to summarise subsets of the input tensor. The purpose of a pooling layer is thus to reduce the spatial size of the representation to reduce the number of parameters and computation in the network, and hence to also control overfitting.

A fully connected layer, which often, but not necessarily, follows a plurality of convolution and pooling layers, takes a two-dimensional tensor (e.g. a tensor with a batch size and a channel dimension) of input data values and outputs a two-dimensional tensor (e.g. a tensor with a batch size dimension and a channel dimension). Where the DNN is used for classification, the output may have $A$ channels where $A$ is the number of classes, and each value in the tensor may represent the probability of a certain class. The output tensor is generated through a matrix multiplication of a set of weights, optionally followed by a bias offset. A fully connected layer thus receives a set of weights and may receive a bias.

A batch normalisation (often referred to as "batch norm") layer, which often, but not necessarily, follows a convolution layer, applies a per channel affine transformation to an input tensor. Batch normalisation layers may be added to a neural network to make training of the neural network faster and more stable by normalisation of a subsequent layer's inputs by re-centring and re-scaling.

A single-shot detector (SSD) neural network is a neural network designed to perform object detection. Objection detection can be distinguished from image classification. Specifically, where image classification takes an image and predicts an object in the image, object detection not only predicts the object but also finds the location of the object in terms of bounding boxes. An SSD neural network is designed to generate an output for an image in a single pass of the neural network. An SSD neural network often comprises a pre-trained objection detection neural network, such as, but not limited to, ResNet or VGG, to extract feature maps, followed by one or more convolution layers. Example SSD neural networks include, but are not limited to, SSD-ResNet34 and SSD-MobileNet.

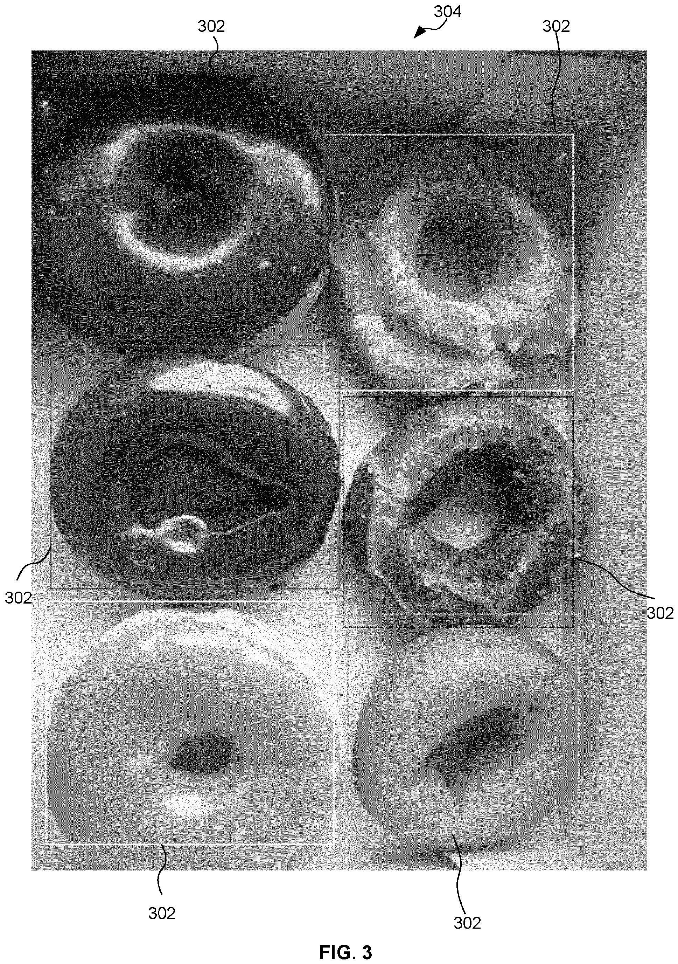

The output of an SSD neural network is information identifying a plurality of bounding boxes in an image, and a confidence score or value for each bounding box for each class of the SSD neural network. Each confidence score indicates the probability or likelihood that the bounding box comprises an object associated with the corresponding class. For example, if an SSD neural network is trained to detect two classes - a dog class and a cat class - then the output of the SSD neural network would comprise, for each bounding box, a confidence score that indicates the probability that the bounding box comprises a dog, a confidence score that indicates the probability that the bounding box comprises a cat, and a confidence score that the indicates the probability that the bounding box comprises the background. FIG. 3 illustrates the bounding boxes 302 in an example image 304 that an example SSD neural network identified as having a high confidence or probability of comprising a donut.

An SSD neural network often generates a large number of bounding boxes, but most of the generated bounding boxes will not be relevant to a class (i.e. do not have a high probability of comprising the targeted object). For example, a bounding box may be relevant to a class if the confidence score for the bounding box is greater than or equal to a predetermined confidence score threshold, and there may be a significant number of bounding boxes that have confidence scores below the predetermined confidence score threshold. Accordingly post processing may be performed on the output of an SSD neural network to improve the usability of the output. For example, post processing may be performed on the output of the SSD neural network to identify, for each class, the top N bounding boxes (in terms of confidence score or value) that meet the predetermined confidence score threshold.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Described herein are methods and systems for performing post processing on data generated by processing an image in accordance with a single-shot detector, SSD, neural network. The data comprises information identifying a plurality of bounding boxes in the image and a confidence score for a class for each bounding box of the plurality of bounding boxes. The method includes: for each bounding box of the plurality of bounding boxes: (a) determining if the confidence score for the bounding box meets a confidence score threshold; (b) in response to determining that the confidence score for the bounding box meets the confidence score threshold, determining if less than a maximum number of bounding boxes entries have been stored in memory, each bounding box entry comprising (i) information identifying a bounding box of the plurality of bounding boxes and (ii) the confidence score of the identified bounding box, (c) in response to determining that less than the maximum number of bounding box entries have been stored in memory, adding a new bounding box entry for the bounding box, (d) in response to determining that the maximum number of bounding box entries have been stored in memory, determining if the confidence score for the bounding box is greater than a lowest confidence score of the bounding box entries, and (e) in response to determining that the confidence score for the bounding box is greater than the lowest confidence score of the bounding box entries, removing the bounding box entry with the lowest confidence score, and adding a new bounding box entry for the bounding box; and once (a) to (e) have been completed for each bounding box of the plurality of bounding boxes, outputting a sorted list of the bounding box entries based on the confidence scores.

A first aspect provides a computer-implemented method of performing post processing on data generated by processing an image in accordance with a single-shot detector, SSD, neural network, the data comprising information identifying a plurality of bounding boxes in the image and a confidence score for a class for each bounding box of the plurality of bounding boxes, the method comprising, using one or more processors: for each bounding box of the plurality of bounding boxes: (a) determining if the confidence score for the bounding box meets a confidence score threshold, (b) in response to determining that the confidence score for the bounding box meets the confidence score threshold, determining if less than a maximum number of bounding boxes entries have been stored in memory, each bounding box entry comprising (i) information identifying a bounding box of the plurality of bounding boxes and (ii) the confidence score of the identified bounding box, (c) in response to determining that less than the maximum number of bounding box entries have been stored in memory, adding a new bounding box entry for the bounding box, (d) in response to determining that the maximum number of bounding box entries have been stored in memory, determining if the confidence score for the bounding box is greater than a lowest confidence score of the bounding box entries, and (e) in response to determining that the confidence score for the bounding box is greater than the lowest confidence score of the bounding box entries, removing the bounding box entry with the lowest confidence score, and adding a new bounding box entry for the bounding box; and once (a) to (e) have been completed for each bounding box of the plurality of bounding boxes, outputting a sorted list of the bounding box entries based on the confidence scores.

A second aspect provides a computer system comprising a neural network accelerator comprising an embedded micro-controller, the micro-controller configured to perform the method of the first aspect.

The neural network accelerator may be configured to process the image in accordance with the SSD neural network using one or more hardware accelerators of the neural network accelerator.

A third aspect provides computer readable code configured to cause the method of the first aspect to be performed when the code is run on a computer system.

A fourth aspect provides computer readable storage medium having stored thereon computer readable instructions that, when executed at a computer system, cause the computer system to perform the method of the first aspect.

A fifth aspect provides a neural network accelerator comprising an embedded micro-controller for performing post processing on data generated by processing an image in accordance with a single-shot detector, SSD, neural network, the data comprising information identifying a plurality of bounding boxes in the image and a confidence score for a class for each bounding box of the plurality of bounding boxes, the micro-controller being configured to: for each bounding box of the plurality of bounding boxes: (a) determine if the confidence score for the bounding box meets a confidence score threshold, (b) in response to determining that the confidence score for the bounding box meets the confidence score threshold, determine if less than a maximum number of bounding boxes entries have been stored in memory, each bounding box entry comprising (i) information identifying a bounding box of the plurality of bounding boxes and (ii) the confidence score of the identified bounding box, (c) in response to determining that less than the maximum number of bounding box entries have been stored in memory, add a new bounding box entry for the bounding box, (d) in response to determining that the maximum number of bounding box entries have been stored in memory, determine if the confidence score for the bounding box is greater than a lowest confidence score of the bounding box entries, and (e) in response to determining that the confidence score for the bounding box is greater than the lowest confidence score of the bounding box entries, remove the bounding box entry with the lowest confidence score, and add a new bounding box entry for the bounding box; and once (a) to (e) have been completed for each bounding box of the plurality of bounding boxes, output a sorted list of the bounding box entries based on the confidence scores.

The neural network accelerators described herein may be embodied in hardware on an integrated circuit. There may be provided a method of manufacturing, at an integrated circuit manufacturing system, a neural network accelerator as described herein. There may be provided an integrated circuit definition dataset that, when processed in an integrated circuit manufacturing system, configures the system to manufacture a neural network accelerator as described herein. There may be provided a non-transitory computer readable storage medium having stored thereon a computer readable description of a neural network accelerator as described herein that, when processed in an integrated circuit manufacturing system, causes the integrated circuit manufacturing system to manufacture an integrated circuit embodying the neural network accelerator.

There may be provided an integrated circuit manufacturing system comprising: a non-transitory computer readable storage medium having stored thereon a computer readable description of a neural network accelerator described herein; a layout processing system configured to process the computer readable description so as to generate a circuit layout description of an integrated circuit embodying the neural network accelerator; and an integrated circuit generation system configured to manufacture the neural network accelerator according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

FIG. 1 is a schematic diagram of an example neural network;

FIG. 2 is a schematic diagram illustrating an example tensor;

FIG. 3 is a schematic diagram illustrating an example image and a plurality of bounding boxes identified by an SSD neural network as having a high probability of comprising a donut;

FIG. 4 is a flow diagram of an example method of performing post processing on data generated by processing an image in accordance with an SSD neural network;

FIG. 5 is a schematic diagram of a first example binary search tree;

FIG. 6 is a schematic diagram of a second example binary search tree which represents the first example binary search tree of FIG. 5 after a node has been added thereto;

FIG. 7 is a schematic diagram of a third example binary search tree which represents the first example binary search tree of FIG. 5 after node has been removed therefrom;

FIG. 8 is a schematic diagram of a fourth example binary search tree which represents the second example binary search tree of FIG. 6 after a node has been removed therefrom;

FIG. 9 is a schematic diagram of a first example min heap;

FIG. 10 is a schematic diagram of a second example min heap which represents the first example min heap of FIG. 9 after a node has been added thereto by adding the new node to the end of the min heap and bubbling the new node up;

FIG. 11 is a schematic diagram of a third example min heap which represents the second example min heap of FIG. 10 after a new node has been added thereto by replacing the root node with the new node and bubbling the new node down;

FIG. 12 is a first graph illustrating the clock cycles to execute SSD post processing using different methods vs the number of bounding boxes that meet the confidence score threshold;

FIG. 13 is a second graph illustrating the clock cycles to execute SSD post processing using different methods vs the number of bounding boxes that meet the confidence score threshold;

FIG. 14 is a flow diagram of an example method for processing an image in accordance with an SSD neural network and performing post processing on the output of the SSD neural network using a neural network accelerator with an embedded micro-controller;

FIG. 15 is a block diagram of an example neural network accelerator with an embedded micro-controller and a convolution accelerator;

FIG. 16 is a block diagram of an example implementation of the convolution accelerator of FIG. 15 comprising a convolution engine;

FIG. 17 is a block diagram of an example implementation of the convolution engine of FIG. 16;

FIG. 18 is a block diagram of an example computer system in which a neural network accelerator described herein may be implemented; and

FIG. 19 is a block diagram of an integrated circuit manufacturing system for generating an integrated circuit embodying a neural network accelerator described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

Described herein are methods and systems for performing post processing on the data generated by processing an image in accordance with an SSD neural network.

As described above, the data generated by processing an image in accordance with an SSD neural network comprises information identifying a plurality of bounding boxes in the image, and a confidence score or value for each bounding box for each class of the SSD neural network. The confidence score for a class indicates the probability or likelihood that the corresponding bounding box comprises an object associated with that class. For example, for a donut class the confidence score indicates the probability that the bounding box comprises a donut. An SSD neural network often generates a large number of bounding boxes, but not all of them will be relevant to a class. For example, a bounding box may be relevant to a class if the confidence score for the bounding box is greater than or equal to a predetermined confidence score threshold, and there may be a significant number of bounding boxes that have confidence scores below the predetermined confidence score threshold. Accordingly post processing (which may be referred to herein as SSD post processing) may be performed on the data generated by processing an image in accordance with an SSD neural network to improve the usability of the data. For example, post processing may be performed on the data generated by processing an image in accordance with an SSD neural network to identify, for each class, the top N bounding boxes (in terms of confidence score or value) that meet the predetermined confidence score threshold.

SSD post processing may be implemented in the following steps: (1) filtering the bounding boxes based on a confidence score threshold; (2) sorting the bounding boxes that meet the confidence score threshold based on the confidence scores; (3) selecting the top N entries of the sorted list; and (4) performing NMS (non-maximum suppression) on the selected top N entries. NMS is the process of removing duplicate bounding boxes that point to the same object. Specifically, NMS identifies pairs of bounding boxes that overlap by more than an overlap threshold and discards the bounding box of the pair with the lower confidence score. In one implementation of NMS, each bounding box is compared against all of the other bounding boxes, and if a pair of bounding boxes is identified that overlap by more than the overlap threshold, the bounding box of that pair with the lowest confidence score is discarded. To determine the overlap between a pair of bounding boxes the IoU (Intersection over Union) may be calculated which is the ratio of (i) the intersection area of the two bounding boxes, and (ii) the total area covered by the bounding boxes. NMS is an $O(N^2)$ operation which means that if there are N entries, $N^2$ operations are performed and as N increases the execution time increases exponentially. To ensure that the NMS processing does not increase linearly, steps (1) to (3) are performed to limit the number of entries for which NMS is performed to N. This method of implementing SSD post processing will be referred to herein as the standard SSD post processing implementation. Where there is more than one class, the post processing is performed separately for each class.

Neural networks are often expensive to implement in terms of computation, bandwidth and power. Accordingly, neural network accelerators (NNAs) have been developed that allow neural networks to be implemented in an efficient manner (e.g., in a manner that requires less silicon area or less processing power).

An NNA is hardware that is designed to accelerate the processing of a neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. NNAs have one or more hardware accelerators designed to accelerate one or more neural network operations. A neural network operation is defined herein as an operation that is used to implement all or a part of a neural network layer. A neural network layer may be implemented by one or more neural network operations. Example neural network operations include, but are not limited to, convolution operations, non-linear operations, pooling operations and normalisation operations.

An NNA may therefore have, for example, a convolution accelerator which is configured to accelerate convolution operations, an activation accelerator which is configured to accelerate non-linear operations, a pooling accelerator which is configured to accelerate pooling operations, and/or a normalisation accelerator configured to accelerate normalisation operations. It will be evident to a person of skill in the art that this is just an example set of accelerators that an NNA may have, and NNAs may have additional accelerators, fewer accelerators or a different combination of accelerators.

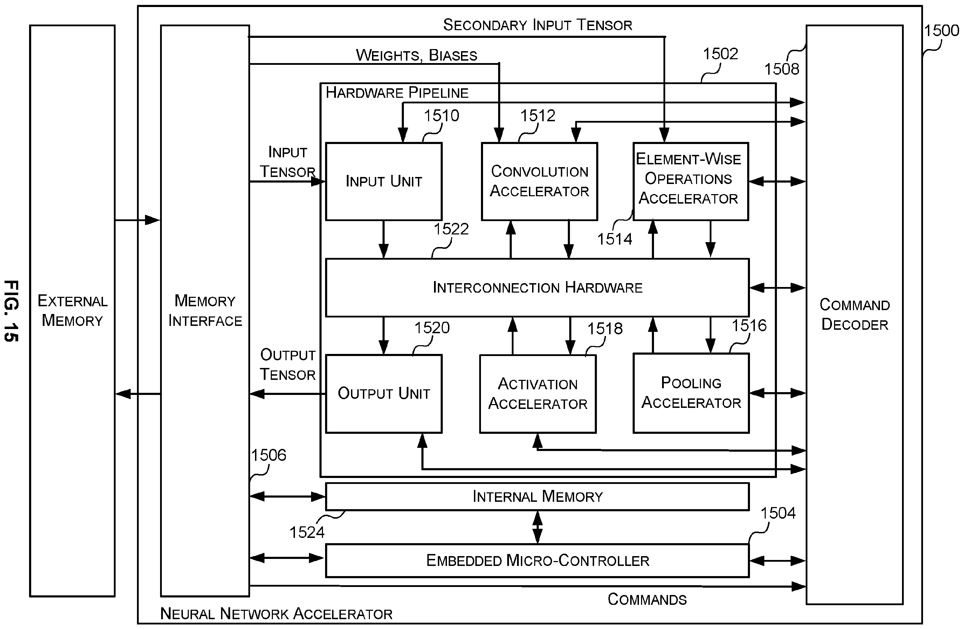

While the SSD neural network itself can be implemented on an NNA, since the accelerators of an NNAs do not typically support the types of operations used to implement the post processing, the post processing is often performed on a CPU. However, it would be desirable to be able to perform the SSD post processing on the NNA so that only the desired N bounding boxes (and associated confidences) have to be output from the NNA instead of all of the bounding boxes (and associated confidences). New NNAs have recently been developed that have an embedded micro-controller which can perform more complicated and more varied operations than the accelerators. The term micro-controller is used herein to mean a small and low-cost microcomputer which is designed to perform one or more tasks or operations within an embedded system. A micro-controller comprises at least a processor, memory and one or more input/output (I/O) ports which can be used to connect the micro-controller to other components of the system. An example NNA with an embedded micro-controller is described below with respect to FIG. 15. However, the micro-controller embedded within in an NNA may have limited memory and compute power and may also have time constraints to ensure that the micro-controller does not become the NNA bottleneck. Due to these constraints the standard method of implementing SSD post processing is not suitable for execution on such a micro-controller.

Specifically, the number of bounding boxes generated by an SSD neural network that meet the confidence score threshold may be significantly larger than N (the maximum number of bounding boxes for which NMS performed). For example, in SSD-ResNet34 the number of bounding boxes that meet the confidence score threshold is often in the thousands whereas the default N is 200. Thus, in the standard SSD post processing implementation many bounding boxes, and associated confidence scores, are stored and sorted that are not ultimately used. Storing all the bounding boxes (and associated confidence scores) that meet the confidence score threshold is inefficient (as it requires the reservation of an amount of memory equal to the maximum number of bounding boxes, in case all the bounding boxes meet the confidence score threshold) and may not even be feasible on a micro-controller, depending on the amount of memory the micro-controller has. Furthermore, sorting a large list on a micro-controller is very slow, and is inefficient if only the top N entries are desired.

Accordingly, described herein is a more hardware efficient method of implementing SSD post processing which can be implemented on a micro-controller, such as, but not limited to, a micro-controller embedded within an NNA. In the methods described herein bounding box entries are maintained in memory for the top N bounding boxes (in terms of confidence scores) that meet the confidence score threshold. In particular, for each bounding box, it is determined whether the confidence score for that bounding box meets the confidence score threshold. If the confidence score of that bounding box does not meet the confidence score threshold, then the bounding box is not further processed. If, however, the confidence score of that bounding box meets the bounding box threshold then it is determined whether N bounding box entries have already been stored. If there are less than N bounding box entries, then a bounding box entry is added for the bounding box. If, however, N bounding box entries have already been stored, then it is determined whether the confidence score of the bounding box is greater than the lowest confidence score of the bounding box entries. If the confidence score of the bounding box is less than or equal to the lowest confidence score of the bounding box entries, then the bounding box cannot be in the top N bounding boxes thus the bounding box is not further processed. If, however, the confidence score of the bounding box is greater than the lowest confidence score of the bounding box entries, then the bounding box entry with the lowest confidence score is removed and a new bounding box entry is added for the bounding box. Once all of the bounding boxes have been processed, a sorted list of the bounding box entries, based on confidence, is generated. NMS may then be performed on this sorted list.

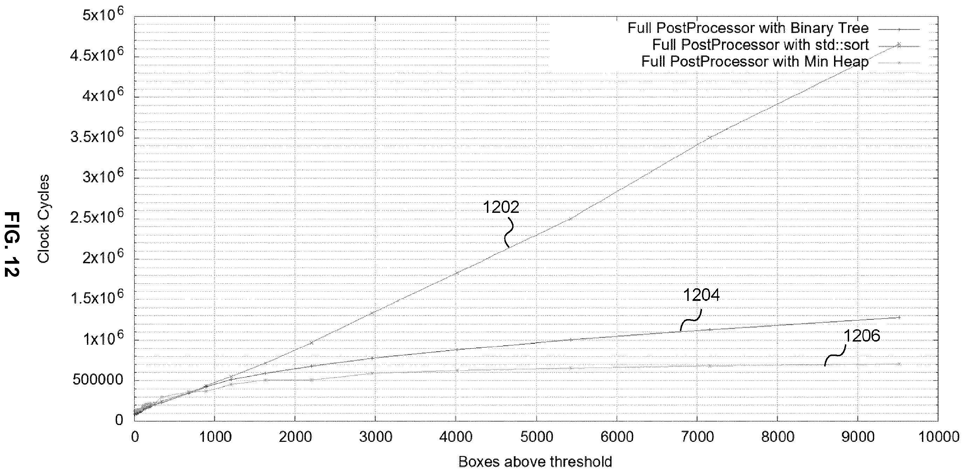

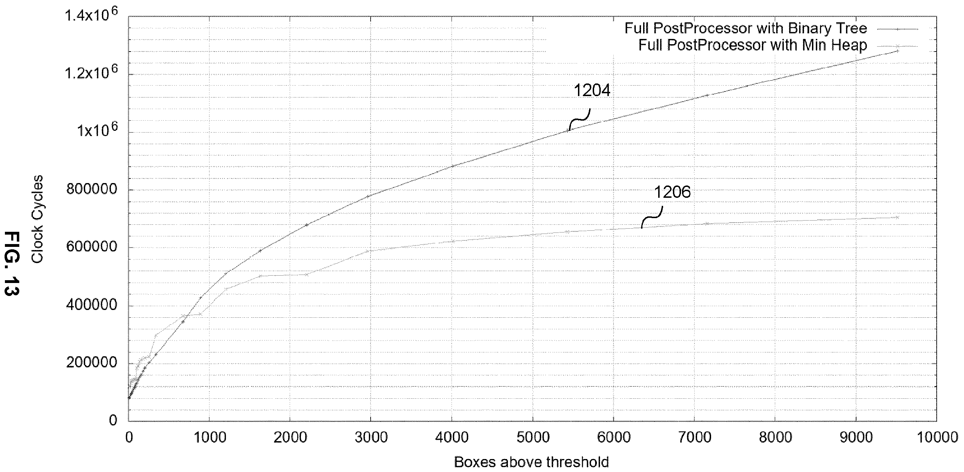

The described method of implementing SSD post processing can significantly reduce the amount of memory required to implement SSD post processing relative to the standard implementation. Specifically, the maximum amount of storage required to implement the described method is N*size of the bounding box entries, whereas the maximum amount of storage for the standard implementation is the maximum number of bounding boxes * size of each bounding box entry. This is because in the described method information is not stored for bounding boxes that are known not to fall within the top N bounding boxes that meet the confidence score threshold. The described method also significantly reduces the time to perform SSD post processing because the bounding boxes that fall below the minimum confidence score of the current N entries are not stored and sorted. Specifically, as described in more detail below with respect to FIGS. 12 and 13, the processing time for the described method increases logarithmically as the number of bounding boxes above the threshold increases, whereas the processing time of the standard implementation increases linearly.

As described above, an SSD neural network, and the post processing performed on the output thereof, perform image processing or analysis. Specifically, SSD neural networks are configured to perform object detection in an image (i.e. detect objects in an image). Accordingly, the methods described herein are directed to a technical purpose of image processing or analysis. Furthermore, the methods described herein are directed to a specific technical implementation - a computer system comprising an NNA with an embedded micro-controller - of SSD post processing which has been particularly adapted for that implementation in that its design is motivated by technical considerations of the internal functioning of such a computer system. Specifically, the method is designed to exploit technical properties of the technical system on which it is implemented to bring about a technical effect of efficient use of computer memory bandwidth. In particular, the method has been specifically designed so that the SSD post processing can be assigned to such a micro-controller. This not only offloads the SSD post processing from the CPU, but it reduces the amount of data that is output from the NNA when an SSD neural network is processed. In particular, since the data generated by the SSD neural network can be passed to the micro-controller for SSD post processing within the NNA, only the post-processed data (which can be significantly smaller that the pre-processed data) is output from the NNA.

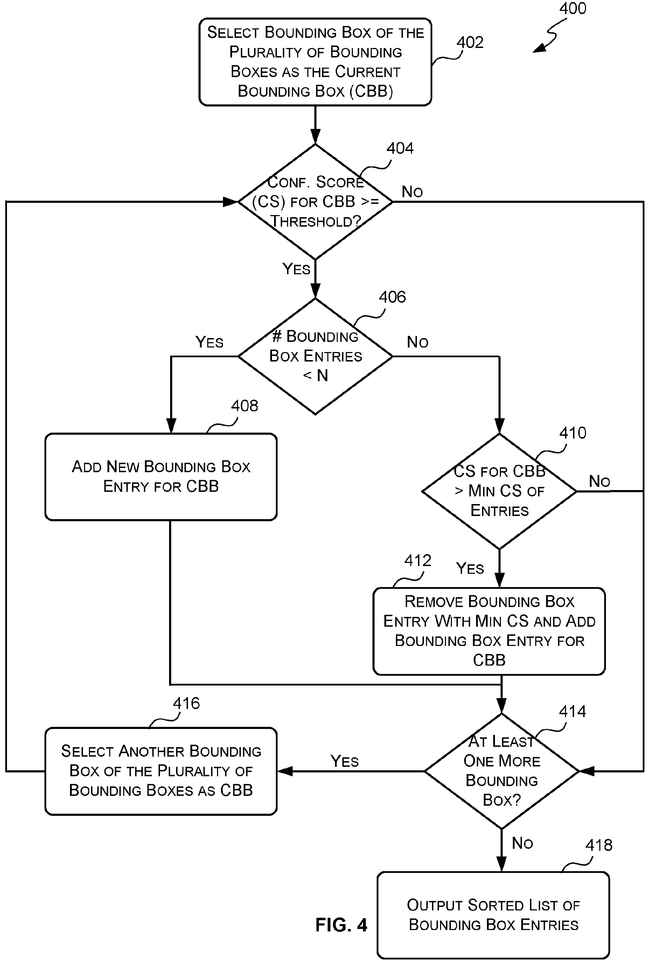

Reference is now made to FIG. 4 which illustrates an example method 400 for performing SSD post processing which may be implemented on a micro-controller, such as a micro-controller embedded within an NNA. As described above, SSD post processing is performed on data generated by processing an image in accordance with an SSD neural network. This data comprises information defining each of a plurality of bounding boxes in the image and a confidence score for each bounding box of the plurality of bounding boxes for one or more classes.

In some cases, the information defining a bounding box may be parameters of the bounding box. The parameters of a bounding box may include, for example, the co-ordinates (e.g. x and y co-ordinates, or w and h co-ordinates) of the centre of the bounding box and the width and height of the bounding box. In other cases, each bounding box may be defined relative to an anchor box. As is known to those of skill in the art, anchor boxes are a predefined set of bounding boxes with different sizes and ratios distributed around an image. In these cases, the information defining a bounding box may comprise deltas or offsets from the parameters of a particular anchor box. The offsets or deltas indicate how the anchor box is to be moved and resized to best fit the object. For example, the information defining a bounding box may comprise a centre x-coordinate delta or offset, a centre y-co-ordinate delta or offset, a width delta or offset and a height delta or offset. As described in more detail below, the parameters of the bounding box can then be determined from the parameters of the anchor box and the deltas or offsets. In yet other cases, the information defining a bounding box may be a set of co-ordinates such as, but not limited to, the x and y co-ordinates that define the four corners of the bounding box. For example, the information defining a bounding box may comprise the left-most x co-ordinate, the right-most x co-ordinate, the top-most y co-ordinate, and the bottom-most y co-ordinate. As described in more detail below, the co-ordinates of a bounding box may be determined from the parameters of the bounding box.

In some cases, the information defining each of the plurality of bounding boxes may be in the form of a single or multi-dimensional array or tensor that has an element, per dimension, for each bounding box that forms the information defining the bounding box; and the confidence scores may be in the form of a single or multi-dimensional array or tensor that has, for each class, an element for each bounding box that comprises the confidence score. For example, where there are 100 bounding boxes and three classes and each bounding box is defined by a set of four deltas or offsets, then the information defining each of the plurality of bounding boxes may be in the form of a two-dimensional array of size 100x4 and element [i, j] of the array comprises the $j^{th}$ delta or offset for the $i^{th}$ bounding box; and the confidence scores may be in the form of a two-dimensional array of size 100x3 and element [i, j] of the array comprises the confidence score for the $j^{th}$ class for the $i^{th}$ bounding box. For example, if elements [99,0], [99,1], and [99,2] of the array are 0.2, 0.3 and 0.5 respectively, there is a 20% probability that the $99^{th}$ bounding box comprises an object of class 0, a 30% probability that the $99^{th}$ bounding box comprises an object of class 1, and a 50% probability that the $99^{th}$ bounding box comprises an object of class 2.

The method 400 begins at block 402 where one of the bounding boxes of the plurality of bounding boxes is identified as a current bounding box (CBB). In some cases, the plurality of bounding boxes may be in an order and the bounding boxes may be processed or analysed in order. In these cases, the first bounding box in the order may be selected as the current bounding box. For example, where the information defining the plurality of bounding boxes is in an array, the first bounding box in the array may be selected as the current bounding box. In such cases, a current bounding box counter may be maintained which keeps track of which element of the array is currently being analysed or processed and thus which bounding box is the current bounding box. Where such a counter is maintained, in block 402 the current bounding box counter may be initialised to identify the first element in the array (e.g. the counter may be initialised to 0). Once one of the bounding boxes of the plurality of bounding boxes is identified as the current bounding box, the method 400 proceeds to block 404.

At block 404, it is determined whether the confidence score for the current bounding box is greater than or equal to a confidence score threshold. A confidence score that is greater than or equal to the confidence score threshold is said to meet the confidence score threshold. The confidence score threshold may be set by the SSD neural network and may be configurable within the SSD neural network. For example, the default confidence score threshold for SSD-MobileNet is 0.5, but the confidence score threshold may be configurable.

In some cases, the confidence score threshold is selected to filter confidence scores after a function f(x) has been applied to the confidence scores generated by the SSD neural network. For instance, in one example f(x) may be 1/(1+exp(-x)). The original confidence scores may be referred to as the raw confidence scores and the confidences scores after the function has been applied thereto may be referred to as the converted confidence scores. Since the converted confidence scores are only used to determine if the confidence scores meet the original confidence score threshold, in some cases, instead of applying the function to each raw confidence score to generate the converted confidence scores, the reverse of the function is applied to the original confidence score threshold and the raw confidence scores are compared to the converted confidence score threshold. For example, if the function is $f(x) = x^2$ then the converted confidence score threshold may be determined to be the square root of the original confidence score threshold. This means that only one value (the original confidence score threshold) is converted instead of each of the raw confidence scores. This conversion of the original confidence threshold may be performed as part of the method 400 (e.g. by the micro-processor) or may be performed offline and simply provided as an input to the method 400.

If it is determined that the confidence score for the current bounding box does not meet the confidence score threshold, then no further processing is performed on the current bounding box and the method 400 proceeds to block 414. If, however, it is determined that the confidence score for the current bounding box meets the confidence score threshold, then the method 400 proceeds to block 406.

At block 406, it is determined whether there are less than the maximum number, N, of bounding box entries in memory. The maximum number, N, is the number of bounding boxes on which NMS is performed. The maximum number, N, may be set by the SSD neural network and may be configurable within the SSD neural network. For example, the default number of bounding boxes on which NMS is performed is 200 for SSD-ResNet34, but the number of bounding boxes on which NMS is performed is configurable. In SSD-MobileNet the parameter that defines the number of bounding boxes on which NMS is performed is referred to as TOP_K. The memory in which the bounding box entries are stored may be memory internal to the device running the method 400. For example, if the method 400 is being executed by a micro-controller, the bounding box entries may be stored in internal memory of the micro-controller.

The set of bounding box entries stored in memory is a running record or list of the top N bounding boxes that meet the confidence score threshold. Each bounding box entry includes (i) information identifying a bounding box of the plurality of bounding boxes and (ii) the confidence score of the identified bounding box.

In some cases, the information in a bounding box entry that identifies a bounding box of the plurality of bounding boxes may comprise a set of parameters defining the bounding box. For example, the information identifying a bounding box may comprise the x and y co-ordinates of the centre of the bounding box, the width of the bounding box, and the height of the bounding box. In other cases, the information identifying a bounding box may comprise a set of co-ordinates that define the four corners of the bounding box. For example, the information identifying a bounding box may comprise a left-most x co-ordinate, the right-most x co-ordinate, the top-most y co-ordinate, and the bottom-most y co-ordinate of the bounding box. In yet other cases, the information identifying a bounding box of the plurality of bounding boxes may be a unique identifier associated with the bounding box from which the parameters and/or co-ordinates of that bounding box can be obtained. Where the information defining the plurality of bounding boxes is in the form of an array or tensor with an element (in one or more dimensions) for each bounding box then the unique identifier may be the element or position of the array or tensor associated with the bounding box. For example, where the information defining a bounding box is in element 5 of an array, then the unique identifier for that bounding box may be the number 5. Storing only the unique identifier in the bounding box entries instead of the bounding box parameters or co-ordinates may significantly reduce the amount of memory used to store the bounding box entries. For example, storing only the unique identifier for a bounding box instead of the bounding box parameters or co-ordinates may allow only one value to be stored instead of four.

In some cases, the information identifying a bounding box and the confidence score for that bounding box may be stored in a bounding box entry in a manner in which the information identifying a bounding box can be separately accessed or read relative to the corresponding confidence score. For example, instead of having one field of the bounding box entry in which both the information identifying the bounding box and the confidence score are stored, there may be one field for storing the information identifying the bounding box entry and a separate field for storing the confidence score. Since the bounding box itself is not used until the NMS stage (e.g. after the list of top N bounding boxes, in terms of confidences values, has been generated), and the confidence scores are used to generate the list of top N bounding boxes, being able to access or read the information identifying a bounding box separately from the associated confidence score allows the confidence score for a bounding box entry to be easily accessed for use in building the list of top N bounding boxes without having to read and/or decode the information identifying a bounding box.

In some cases, a bounding box entries counter may be maintained which reflects the number of bounding box entries in memory. In such cases the bounding box entries counter may be initialised to zero and may be incremented by 1 each time a bounding box entry is added, up until the point when the counter is equal to N. At that point, the bounding box entries counter may not be further adjusted since, at that point, the number of bounding box entries will stay constant at N. In such cases, it may be determined that less than the maximum number, N, of bounding box entries have been stored by comparing the bounding box entries counter to N and determining that less than the maximum number, N, of bounding box entries have been stored if the bounding box entries counter is less than N.

If it is determined that less than the maximum number, N, of bounding box entries have been stored in memory, then it is known that, at this point in the method 400, the current bounding box is in the top N bounding boxes (based on confidence scores) that meet the confidence score threshold. Accordingly, the method 400 proceeds to block 408 where a new bounding box entry is added for the current bounding box. If, however, it is determined that the maximum number, N, of bounding box entries have already been stored in memory then the method 400 proceeds to block 410 where it is determined whether the current bounding box is, at this point in the method 400, in the top N bounding boxes (based on confidence scores) that meet the confidence score threshold.

At block 408, a new bounding box entry is added for the current bounding box.

Adding a new bounding box entry for the current bounding box comprises storing in the memory the information or data that forms or defines the bounding box entry. As described above, each bounding box entry comprises (i) information identifying a bounding box which may be, for example, a unique identifier of the bounding box, the parameters of the bounding box, or the co-ordinates of the bounding box; and (ii) the confidence score for the identified bounding box.

Where the information in a bounding box entry identifying a bounding box comprises the parameters of the bounding box or the co-ordinates of the bounding box, and the received information defining the bounding box is a set of offsets or deltas relative to an anchor box then the step of adding a bounding box entry for the current bounding box may comprise generating the parameters of the bounding box from the set of offsets or deltas and the anchor box. A person of skill in the art would be able to generate the parameters for a bounding box from a set of offsets or deltas and an anchor box. For example, where the parameters of a bounding box comprise the x and y co-ordinates of the centre of the bounding box (denoted xc and yc respectively) and the height and width of the bounding box (denoted h and w respectively) the following is example pseudo-code for generating xc, yc, h and w based on respective offsets or deltas (denoted delta. x, delta. y, delta. h, and delta. w) and the parameters of an anchor box (denoted anchor. x, anchor. y, anchor. h, anchor . w) where DEF_WH_SCALE and DEF_XY_SCALE are configurable scaling factors.

```
xc = anchor.x + anchor.w * (delta.x * DEF_XY_SCALE);

yc = anchor.y + anchor.h * (delta.y * DEF_XY_SCALE);

tmp = delta.w * DEF_WH_SCALE;

w = anchor.w *fexp(tmp);

tmp = delta.h * DEF_WH_SCALE;

h = anchor.h * fexp (tmp);
```

Where the information in a bounding box entry identifying a bounding box comprises the parameters of the bounding box then the generated parameters may be stored in memory.

Where, however, the information in a bounding box entry identifying a bounding box comprises the co-ordinates of the bounding box then the step of adding a bounding box entry for the current bounding box may further comprise generating the co-ordinates for the bounding box from the generated parameters for the bounding box. A person of skill in the art would be able to generate the co-ordinates for a bounding box from the parameters of the bounding box. For example, where the parameters of a bounding box comprise the x and y co-ordinates of the centre of the bounding box (denoted xc and yc respectively) and the height and width of the bounding box (denoted h and w respectively) the following is example pseudo-code for generating the left, right, top and bottom co-ordinates (denoted left, right, top and bottom respectively) therefrom. The generated co-ordinates may then be stored in memory as part of the new bounding box entry.

```
left = xc - w/2;

right = xc + w/2;
```

$$top = yc - h/2;$$

$$bottom = yc - h/2;$$

In some cases, the co-ordinates are expected to be within a predetermined range, such as, but not limited to [0, 1]. In these cases, prior to storing the generated co-ordinates in memory as part of the new bounding box entry, the generated co-ordinates may be clipped or clamped to the desired range. As known to those of skill in the art, clipping or clamping a received value to a specified range comprises outputting the minimum value of the range if the received value is less than the minimum value, outputting the maximum value of the range if the received value is greater than the maximum value, and outputting the received value otherwise. The following is example pseudocode for clipping the generated co-ordinates (denoted left, right, top and bottom) to between 0 and 1.

$$left = Min (left, 1);$$

$$left = Max (left, 0);$$

$$right = Min (right, 1);$$

$$right = Max (right, 0);$$

$$top = Min (top, 1);$$

$$top = Max (top, 0);$$

$$bottom = Min (bottom, 1);$$

$$bottom = Max (bottom, 0);$$

In some cases, the bounding box entries may be stored in an array. In such cases, the new bounding box entry may be stored in the next available element of the array.

In some cases, the bounding box entries may be stored in an ordered data structure in which the order or position of the bounding box entries in the structure is based on their confidence scores. Ordered data structures include, but are not limited to, linked data structures, such as, but not limited to, a binary search tree (BST) structure and an ordered singly linked list structure and other structures that order or position the elements in the structure based on a key such as, but not limited to, a min heap structure.

As is known to those of skill in the art, a singly linked list data structure comprises a plurality of nodes connected by links or pointers in a sequence. Specifically, each node comprises a single link or pointer to another node The first node is referred to as the head node and the last node may be referred to as the tail node. The tail node has a pointer that point to NULL. In an ordered singly linked list structure the nodes may be linked in ascending order or descending order with respect to the keys of the nodes. When the nodes are linked in ascending order then each node's pointer points to the node with the next highest key, and when the nodes or elements are linked in descending order then each node's pointer points to the node with the next lowest key. The nodes are each associated with data (such as the key and/or other data) and the associated data may be stored within the node (which may be called an intrusive node data structure) or the node may store a link or pointer to the associated data (which may be called a non-intrusive node data structure). BST and min heap data structures will be described in more detail below. Storing the bounding box entries in an ordered data structure enables the new minimum confidence score after a bounding box entry has been removed and a new bounding box entry has been added (see block 412) to be efficiently identified.

As described in more detail below, for some ordered data structures, such as linked data structures, additional data or information may be stored for each bounding box entry which describes its position in the ordered data structure relative to the other bounding box entries in the ordered data structure. For example, if the bounding box entries are stored in a singly linked list data structure in which the bounding box entries are linked in descending order, in addition to storing each bounding box entry, a node is stored for each bounding box entry which comprises (i) a link to the node associated with the bounding box entry with the next lowest confidence score, and (ii) information identifying the bounding box entry associated with the node. The information identifying the bounding box entry may comprise a link to the bounding box entry (non-intrusive format) or may comprise the bounding box entry itself (intrusive format).

For example, if bounding box entries for three bounding boxes A, B, and C with confidence scores 0.5, 0.9, and 0.6 respectively are stored in a singly linked list structure in which the bounding box entries are linked in descending order, then there will be a head pointer that points to the node associated with the bounding box entry for bounding box B; the node associated with the bounding box entry for bounding box B will point to the node associated with the bounding box entry for bounding box C; the node associated with the bounding box entry for bounding box C will point to the node associated with the bounding box entry for bounding box A; and the node associated with the bounding box entry for bounding box A will have a NULL pointer indicating that that associated bounding box entry is the bounding box entry with the lowest confidence score.

Where the bounding box entries are stored in an ordered data structure, storing a new bounding box entry for the current bounding box may further comprise determining the position of the bounding box entries (including the new bounding box entry) in the ordered data structure based on the confidence scores of the bounding box entries and updating the ordered data structure to reflect the identified positions of the bounding box entries. In some cases, the identification of the positions of the bounding box entries in the ordered data structure may be performed before the new bounding box entry is stored in memory. In other cases, the identification of the positions of the bounding box entries in the ordered data structure may be performed after the new bounding box entry is stored in memory. As described in more detail below, updating the ordered data structure may, for example, comprise updating information (e.g. pointers) indicating the order or position of the bounding box entries in the ordered data structure to reflect the identified positions for the bounding box entries; or may comprise storing the bounding box entries or associated nodes in specific locations in memory to reflect the identified positions of the bounding box entries in the ordered data structure.

For example, let bounding box entries for three bounding box entries A, B and C with confidences scores 0.7, 0.6 and 0.5 respectively be stored in a singly linked list data structure in which the bounding box entries are linked in descending order such that the node associated with the bounding box entry for bounding box A points to the node associated with the bounding box entry for bounding box B, the node associated with the bounding box entry for bounding box B points to the node associated with the bounding box entry for bounding box C, and the node associated with the bounding box entry for bounding box C points to NULL. If a new bounding box entry for bounding box D with a confidence score of 0.55 is to be added then it would be determined that the new bounding box entry is to be inserted, in the singly linked list structure, between the bounding box entries for bounding boxes B and C. Therefore, in this example, updating the ordered data structure may comprise updating or setting the pointer in the node associated with the new bounding box entry to point to the node associated with the bounding box entry for bounding box C, and updating or setting the pointer in the node associated with the bounding box entry for bounding box B to point to the node associated with the bounding box entry for bounding box D.

Once a new bounding box entry has been added for the current bounding box, the method 400 proceeds to block 414.

At block 410, it is determined whether the current bounding box is, at this point in the method 400, in the top N bounding boxes (in terms of confidence scores) that meet the confidence score threshold. This may be determined by comparing the confidence score for the current bounding box to the lowest confidence score of the existing bounding box entries.

In some cases, comparing the confidence score for the current bounding box to the lowest confidence score of the existing bounding box entries, comprises analysing the bounding box entries to identify the lowest confidence score of the bounding box entries and then comparing the identified lowest confidence score to the confidence score of the current bounding box. Depending on the data structure in which the bounding box entries are stored this may involve analysing many of the bounding box entries. Accordingly, in other cases, to reduce the number of times the bounding box entries are analysed to identify the lowest confidence score of the bounding box entries, the method 400 may comprise, maintaining a record of the current lowest confidence score of the bounding box entries, and when a new bounding box entry is added, updating the current lowest confidence score record to reflect the current lowest confidence score.

When a new bounding box entry is added when there are less than N bounding box entries (e.g. block 408) updating the current lowest confidence score may comprise comparing the confidence score of the new bounding box entry to the current lowest confidence score and updating the current lowest confidence score record with the lower of the current lowest confidence score and the confidence score of the new bounding box entry. When, however, a new bounding box entry is added when there are already N bounding box entries then, as described in block 412 below, the bounding box entry with the lowest confidence score is removed and the new bounding box entry is added. In these cases, updating the current lowest confidence score record may comprise determining the next lowest confidence score of the bounding box entries, and updating the current lowest confidence score with the lower of (i) the determined next lowest confidence score and (ii) the confidence score of the new bounding box entry.

If the confidence score for the current bounding box is less than or equal to the lowest confidence score of the existing bounding box entries, then the current bounding box is not in the top N bounding boxes that meet the confidence score threshold. Accordingly, no further processing is performed on the current bounding box and the method 400 proceeds to block 414. If, however, the confidence score for the current bounding box is greater than the lowest confidence score of the bounding box entries, then the current bounding box is, at this point in the method 400, in the top N bounding boxes (in terms of confidence scores) that meet the confidence score threshold and the method 400 proceeds to block 412.

At block 412, once it has been determined that the confidence score of the current bounding box is greater than the lowest confidence score of the bounding box entries, to ensure that the bounding box entries reflect the top N bounding boxes that meet the confidence score threshold, the bounding box entry with the lowest confidence score is removed and a new bounding box entry for the current bounding box is added.

Where the bounding box entries are stored in an ordered data structure, removing the bounding box entry with the lowest confidence score may include (i) identifying the bounding box entry with the lowest confidence score; (ii) removing the data defining the identified bounding box entry from memory; and (iii) updating the ordered data structure to remove the identified bounding box entry therefrom. The implementation of each of these steps may depend on the ordered data structure which is used to store the bounding box entries.

In some cases, identifying the bounding box entry with the lowest confidence score may comprise reading information at a specific location in memory which is known to comprise information identifying the bounding box entry with the lowest confidence score. For instance, if the bounding box entries are stored in a min heap data structure or a similar structure then information identifying the bounding box entry with the lowest confidence score will be stored in the first memory slot or entry, and if the bounding boxes entries are stored in a singly linked list data structure in which the bounding box entries are linked in ascending order, then information identifying the bounding box entry with the lowest confidence score will be stored in the head node. In other cases, identifying the bounding box entry with the lowest confidence score may comprise analysing one or more bounding box entries in accordance with the order set out in the ordered data structure. For instance, if the bounding box entries are stored in a singly linked data structure in which the bounding box entries are linked in descending order the bounding box entry with the lowest confidence score may be identified by traversing the links. For example, where the bounding box entries are stored in a singly linked list data structure in which the bounding box entries are linked in descending order, identifying the bounding box entry with the lowest confidence score may comprise following or traversing the links in the nodes, starting with the head node, until a node is identified with a NULL pointer The bounding box entry associated with that node is the bounding box entry with the lowest confidence score.

Removing the data defining the bounding box entry with the lowest confidence score may comprise, for example, nullifying or zeroing the bounding box entry in memory; and/or overwriting the bounding box entry with the data defining another bounding box entry, such as, the new bounding box entry or another bounding box entry.

Updating the ordered data structure to remove the identified bounding box entry may comprise, for example, overwriting the bounding box entry with the data defining another bounding box entry, such as, the new bounding box entry or another bounding box entry; or updating the information (e.g. links) defining the ordered data structure to reflect the fact that the identified bounding box entry does not form part of the ordered data structure. For example, where the bounding box entries are stored in a singly linked list data structure where the bounding boxes are linked in descending order, updating the ordered data structure to remove the identified bounding box entry may comprise updating or setting the pointer for the node associated with the bounding box entry preceding the identified bounding box entry in the list to NULL.

When the bounding box entries are stored in an ordered data structure, adding a new bounding box entry for the current bounding box may comprise (i) storing data defining the new bounding box entry in memory; (ii) determining the positions of the new set of bounding box entries (without the bounding box entry with the previous lowest confidence score and with the new bounding box entry for the current bounding box) in the ordered data structure based on the confidence scores and (iii) updating the ordered data structure to reflect the determined positions for the bounding box entries. It will be evident that this is an example order of the steps and in other examples the steps may be performed in another order and/or two or more of the steps may be combined. The implementation of these steps may depend on the ordered data structure that is used to store the bounding box entries.

Storing data defining the new bounding box entry in memory may comprise storing, in memory, information identifying the bounding box and the confidence score for the identified bounding box. Where the information identifying the bounding box comprises the parameters or the co-ordinates of the bounding box and the received information defining the bounding box is a set of offsets or deltas relative to an anchor box then adding a new bounding box entry for the current bounding box may comprise generating the parameters and/or co-ordinates of the current bounding box from the set of offsets or deltas and the anchor box, and storing the generated parameters or co-ordinates in the new bounding box entry. An example method of generating bounding box parameters and/or co-ordinates from a set of offsets or deltas and an anchor box was described above with respect to block 408.

In some cases, such as when the bounding box entries are stored in a linked data structure or when the nodes of the structure are in a non-intrusive format, the new bounding box entry may replace the removed bounding box entry in memory. In other words, in these cases, the data defining the new bounding box entry may be stored in the same portion of memory in which the data defining the removed bounding box entry was stored. For example, where the bounding box entries are stored in an array, the new bounding box entry may be stored in the same element of the array as the bounding box entry that was removed. For instance, if the data defining the removed bounding box entry was previously stored in element 5 of the array, then the data defining the new bounding box entry may be stored in element 5 of the array. In other cases, such as when a min heap data structure is used to store the bounding box entries and the nodes are in an intrusive format, the location in memory where the data defining the new bounding box entry is stored may be dependent on the positions of the new set of bounding box entries in the ordered data structure.

How the positions of the set of bounding box entries in the ordered data structure are determined and how the ordered data structure is updated to reflect the determined positions is based on the type of ordered data structure used to store the bounding box entries. For example, if the bounding box entries are stored in a singly linked list data structure in which the bounding box entries are linked in descending order then determining the positions of the set of bounding box entries in the ordered data structure may comprise determining the location of the new bounding box entry for the current bounding box by following the links in the nodes, starting with the head node, until the node associated with the next highest confidence score relative to the new bounding box entry is identified (or it is identified that the new bounding box entry will have the highest confidence score) and the node associated with the next lowest confidence score relative to the new bounding box entry is identified (or it is identified that the new bounding box entry will have the lowest confidence score). In this example, updating the ordered data structure to reflect the determined positions of the bounding box entries in the ordered data structure may comprise updating or setting the pointer in the node associated with the new bounding box entry to point to the node associated with the bounding box entry with the next lowest confidence score (if the new bounding box entry does not have the lowest confidence score) or to NULL (if the new bounding box entry has the lowest confidence score); and updating or setting the pointer for the node associated with the bounding box entry with the next highest confidence score (if it is not the bounding box entry with the highest confidence score) to point to the node associated with the new bounding box entry, or setting or updating the head pointer to point to the node associated with the new bounding box entry (if the new bounding box entry has the highest confidence score).

For instance, if the singly linked list data structure in which the bounding boxes are linked in descending order comprises bounding box entries for bounding boxes A, B and C with confidence scores 0.7, 0.6 and 0.5 respectively and the current bounding box has a confidence score of 0.65 then the links of the nodes are followed until it is determined that the new bounding box entry is to be inserted between the bounding box entries for bounding boxes A and B. The pointer in the node associated with the new bounding box entry is then updated or set to point to the node associated with the bonding box entry for bounding box B; and the pointer in the node associated with the bounding box entry for bounding box A is updated or set so that it points to the node associated with the new bounding box entry.

Once the bounding box entry with the lowest confidence score has been removed and a new bounding box entry for the current bounding box has been added, the method 400 proceeds to block 414.

At block 414, it is determined whether there are any bounding boxes in the plurality of bounding boxes that have not been analysed or processed (e.g. by blocks 404 to 412). Where a current bounding box counter is maintained then determining whether there are any bounding boxes in the plurality of bounding boxes that have not yet been analysed may comprise comparing the current bounding box counter to the number of bounding boxes and determining that there is at least one bounding box of the plurality of bounding boxes that has not been analysed or processed if the current bounding box counter is less than the number of bounding boxes less one (if the counter started at zero). If there is at least one bounding box of the plurality of bounding boxes that has not been analysed or processed then the method 400 proceeds to block 416. If, however, each of the plurality of bounding boxes has been analysed then the method 400 proceeds to block 418.

At block 416, one of the bounding boxes of the plurality of bounding boxes that has not yet been analysed or processed is selected as the current bounding box. As described above, in some cases, the bounding boxes may be in an order and the bounding boxes may be processed in that order. In these cases, the next bounding box in the order may be selected as the current bounding box. Where a current bounding box counter is maintained, selecting the next bounding box to analyse may comprise incrementing the current bounding box counter. Once an unanalysed bounding box of the plurality of bounding boxes has been identified as the current bounding box, the method 400 proceeds back to block 404.

At block 418, a sorted list of the bounding box entries, based on the confidence scores, is generated. Where the bounding box entries are stored in an ordered data structure the sorted list of the bounding box entries may be generated by traversing the sorted structure. For example, where the bounding box entries are stored in an ordered singly linked list structure (where the bounding box entries are linked in ascending or descending order) the links of the nodes, starting with the base or root node, are traversed to determine the order of the bounding box entries based on confidence scores. Once the sorted list of the bounding box entries has been generated the method 400 may end or NMS may be performed on the sorted list of bounding box entries.

As described above, NMS identifies pairs of bounding boxes that overlap by more than an overlap threshold and discards the bounding box of each pair with the lower confidence score. In one implementation of NMS, each bounding box identified in the sorted list of bounding box entries is compared against all of the other bounding boxes identified in the sorted list of bounding box entries, and if a pair of bounding boxes is identified that overlap by more than the overlap threshold, the bounding box of that pair with the lowest confidence score is discarded. To determine the overlap between a pair of bounding boxes the IoU (Intersection over Union) may be calculated which is the ratio of (i) the intersection area of the two bounding boxes and (ii) the total area covered by the bounding boxes. A person of skill in the art would be able to generate the IoU for a pair of bounding boxes. The following is example pseudo code for generating the IoU (denoted iou) - the ratio of the intersection area (denoted iarea) and the union area (denoted uarea) - from the left, right, top and bottom co-ordinates (denoted left, right, top, bottom respectively) for a first bounding box (denoted a) and a second bounding box (denoted b).

```
ileft = max (a.left, b.left)

iright = min (a.right, b.right)

itop = max (a.top, b.top)

ibottom = min (a.bottom, b.bottom)

w = iright - ileft;

h = ibottom = itop;

iarea = w * h;

wa = (a.right - a.left);

ha = (a.bottom - a.top);

wb = (b.right-b.left);

hb = (b.bottom-b.top);

aa = wa * ha;

ab = wb * hb;

uarea = a1 + a2 - iarea;
```

```
iou = iarea/uarea;
```

Where the information in a bounding box entry that identifies a bounding box comprises a bounding box identifier (as opposed to information defining the bounding box such as the parameters or co-ordinates of the bounding box), performing NMS on the sorted list of bounding boxes generated in block 418 may comprise obtaining the information defining each bounding box in the list (e.g. the parameters and/or co-ordinates of the bounding box) from its corresponding identifier and performing the NMS based on the obtained information. In some cases, the device performing the method 400 may have access to the original information defining the plurality of bounding boxes (e.g. the original information defining the plurality of bounding boxes may be stored in memory external to the device (e.g. micro-controller) executing the method) and the information defining a particular bounding box may be identified or extracted from the original information defining the plurality of bounding boxes from the bounding box identifier for that bounding box. For example, in some cases, the original information defining the plurality of bounding boxes is in the form of an array with an element (in one or more dimensions) for each bounding box, the identifier for a bounding box may be the position of the corresponding element(s), and the information defining a particular bounding box is obtained by reading the elements of the array at the identifier position. For instance, if the data defining a particular bounding box is stored at element(s) 5 of the array, then an identifier of 5 may be stored, and the data at element 5 of the array may be read and used to perform NMS.

Where, at this point, the information defining each bounding box comprises deltas relative to an anchor box because, for example, it was the deltas that were stored in the bounding box entry or because it was the deltas that were retrieved from the bounding box identifiers, then, prior to performing NMS the parameters (e.g. x and y co-ordinates of the centre, height, width) and/or the co-ordinates (left, right, top, bottom co-ordinates) for each bounding box may be determined from the deltas and the anchor box as described above with respect to block 408. Where the parameters and/or co-ordinates are expected to be within a predetermined range clipping or clamping may also be performed on the parameters and/or co-ordinates as described above with respect to block 418.

Where the SSD neural network has more than one class then the method 400 of FIG. may be executed or performed for each class, except for the background class.

Although the method 400 of FIG. 4 has been described above as being executed on a micro-controller, such as an embedded micro-controller of an NNA, the benefits of the method in terms of reduced memory and execution time can be achieved on any processor, even a CPU. Accordingly, the method 400 of FIG. 4 may be executed by any processor.

Binary Search Tree (BST)

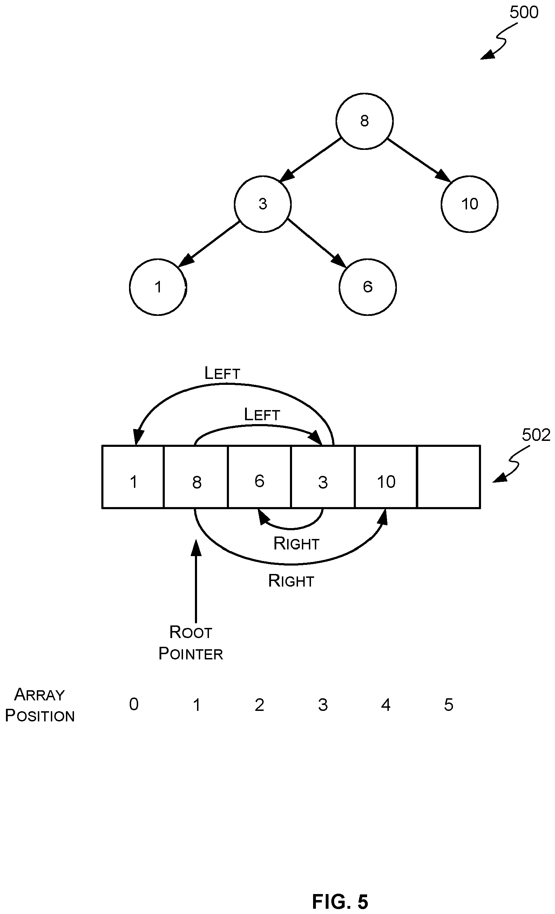

In some cases, the bounding box entries may be stored in a binary search tree (BST) structure. A BST structure is a binary tree data structure that conforms to certain rules or properties. A binary tree comprises a plurality of connected or linked nodes where each node can have a left child node and right child node. In a BST structure, the nodes are arranged based on the keys of the nodes. Specifically, the left sub-tree of a node contains only nodes with keys less than or equal to that node's key, and the right sub-tree of a node contains only nodes with keys greater than that node's key. This is illustrated in FIG. 5 which shows an example BST 500 with a plurality of nodes shown as circles. In FIG. 5 the key for each node is shown within the circle of the node. For example, the key for the head node is 8. It can be seen in FIG. 5 that any node with a key less than 8 is in the left sub-tree from the head node, and any node with a key greater than 8 is in the right sub-tree from the head node.

To store the bounding box entries in a BST there is a node for each bounding box entry and the confidence score of the associated bounding box entry is the key of the node. Each node comprises a pointer to the left child node (which is set to NULL (or a similar value) if there is no left child node), a pointer to the right child node (which is set to NULL (or a similar value) if there is no right child node) and information identifying the associated bounding box entry. There is also a root pointer for the BST which points to the root node. Accordingly the root pointer and the left and right child node pointers define the BST and thus the order or position of the bounding box entries in the BST.

In some cases, the nodes of the BST may be stored in intrusive data structures. In an intrusive data structure the data associated with the node (e.g. the associated bounding box entry) forms part of the node. For example, if the nodes are stored in an intrusive data structure each node may have the following structure (node_bst) where *left is the left child node pointer, *right is the right child node pointer, and scorebox is a bounding box entry which has a scorebox_t structure as defined below where box is information identifying a bounding box and score is the confidence score for the identified bounding box. In this example, the information identifying a bounding box (box) has a box_t structure as defined below where left, right, top and bottom are the left, right, top and bottom co-ordinates of the bounding box respectively.

```
typedef struct node_bst {
    struct node_bst *left;
```

```
        struct node_bst *right;
        struct scorebox_t scorebox;
    } node_bst;
    typedef struct scorebox_t{
        float score;
        box t box;
    }scorebox_t;
     typedef struct {
        float top;
        float left;
        float bottom;
        float right;
    } box_t;
```

In other cases, the nodes may be stored in non-intrusive data structures. In a non-intrusive data structure the data associated with the node (e.g. the associated bounding box entry) does not form part of the node, but instead the node has a pointer to the data (e.g. a pointer to the associated bounding box entry). For example, in such cases each node may have the following structure where *left is the left child node pointer, *right is the right child node pointer, and *pdata is a pointer to the associated bounding box entry which has a scorebox_t structure as defined above.

```
    typedef struct node_bst {
        struct node bst *left;
        struct node bst *right;
        struct scorebox_t *pdata;
    } node_bst;
```

Moving and/or updating nodes in a non-intrusive data structure may be faster than moving and/or updating nodes in an intrusive data structure as less data has to be moved. However, accessing the key (e.g. confidence score) may be slower in a non-intrusive data structure relative to an intrusive data structure because it requires dereferencing an extra pointer. For simplicity, in the examples described below the nodes of the BST are implemented in intrusive data structures such that each node comprises the associated bounding box entry, but it will be evident to a person of skill in the art that this is an example only and that the nodes of the BST may alternatively be implemented in non-intrusive data structures.

When the bounding box entries are stored in a BST structure, bounding box entries are added and removed in a manner that maintains the BST structure - i.e. conforms to the rules and properties of BSTs.

For example, when the bounding box entries are stored in a BST structure, adding a new bounding box entry when less than N bounding box entries have been stored in memory (i.e., block 408 of the method 400 of FIG. 4) may comprise (i) storing the new bounding box entry in the next available memory location or position; (ii) identifying the position of the new bounding box entry within the BST based on the confidence scores of the bounding box entries; and (iii) updating the pointers or links of the BST to reflect the determined position of the new bounding box entry.

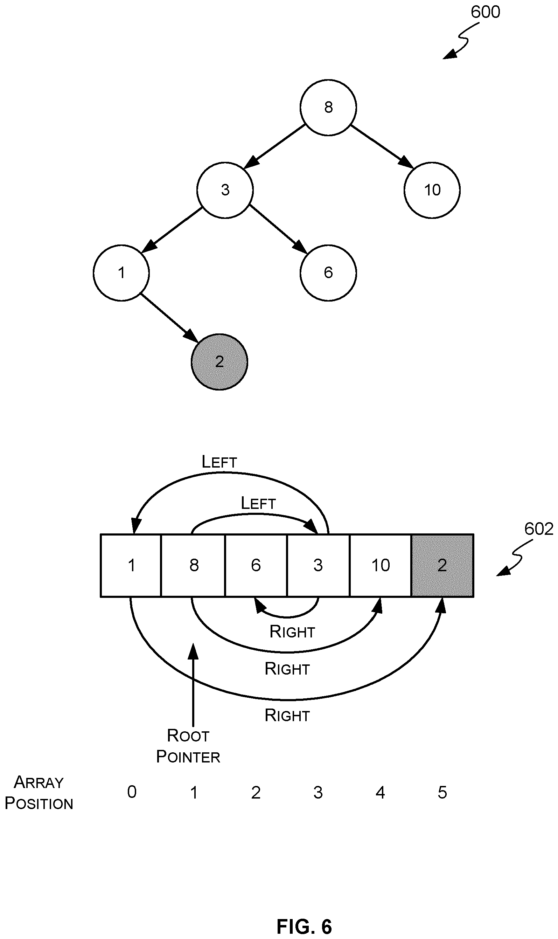

For example, let each node of the BST 500 of FIG. 5 be associated with a bounding box entry and the key shown in FIG. 5 represents the confidence score of the associated bounding box entry. In this example the nodes are stored in an intrusive manner such that each node comprises the left and right child node pointers and the associated bounding box entry. In FIG. 5 the nodes (and thus their associated bounding box entries), are stored in an array 502 with six elements or positions (i.e. N = 6). The first five nodes (and associated bounding box entries) have been stored in elements 0 to 4 of the array respectively. If a new bounding box entry is to be added to the BST 500 with a confidence score of 2 then a node comprising the new bounding box entry is stored in element or position 5 which is the next free position or element of memory. The updated array 602 is shown in FIG. 6. Storing the new node associated with the bounding box entry in the identified memory location may comprise storing (i) storing information identifying the bounding box; (ii) storing the confidence score associated with the identified bounding box; and (iii) setting the left and right child pointers of the node to NULL. For simplicity, the information identifying a bounding box is not shown in the FIGS. and the left and right child pointers are shown graphically. As will be described in more detail in the next paragraph, a new node is always added as a child node thus the child pointers of a new node associated with a new bounding box entry can always be set to NULL.

The position of the new bounding box entry in the BST structure may be identified by analysing the bounding box entries in accordance with the BST. Specifically, the position in a BST structure for a new bounding box entry may be determined by recursively comparing the confidence score of the new bounding box entry to the confidence score of a node of a sub-tree, referred to as the test node, starting with the root node of the BST. If the test node is NULL, then the new bounding box entry is inserted at this position in the BST (step(a)). If the test node is not NULL, then it is determined whether the confidence score of the new bounding box entry is less than or equal to the confidence score for the test node (step (b)). If the confidence score of the new bounding box entry is less than or equal to the confidence score of the test node (step (c)), then the test node's left child node becomes the new test node, and the process (steps (a) to (d)) is repeated. If, however, the confidence score of the new bounding box entry is greater than the confidence score of the test node then the test node's right child node becomes the new test node (step (d)), and the process (steps (a) to (d)) is repeated.

For example, let each node of the BST 500 of FIG. 5 be associated with a bounding box entry with a confidence score equal to the key. If a new bounding box entry is to be added with a confidence score of 2 to this BST 500, then the position of the new bounding box entry in the BST is determined by first setting the test node to the root node. It is then determined if the confidence score (2) of the new bounding box entry is greater than the confidence score (8) of the test node. The confidence score (2) of the new bounding box entry is less than the confidence score (8) of the test node, so the left child node of the test node becomes the new test node (this is the node with a confidence score of 3). The new test node is not NULL, so it is then determined whether the confidence score (2) of the new bounding box entry is less than the confidence score (3) of the new test node. The confidence score (2) of the new bounding box entry is less than the confidence score (3) of the test node, so the left child node of the test node becomes the new root (this is the node with a confidence score of 1). The new test node is not NULL, so it is then determined whether the confidence score (2) of the new bounding box entry is less than the confidence score (1) of the new test node. The confidence score (2) of the new bounding box entry is greater than the confidence score (1) of the new test node so the right child node (NULL) becomes the new test node. The new test node is NULL, so the new bounding box entry is to be associated with the right child node of the previous test node (i.e., the node with a confidence score of 1).

Once the position of the new bounding box entry in the BST has been identified the links of the bounding box entries are updated to reflect the identified location of the new bounding box entry in the BST. In the example described with respect to FIGS. 5 and 6, this comprises updating the right child pointer for the previous test node to point to the node associated with the new bounding box entry - i.e., it points to element 5 of the array. FIG. 6 shows a BST 600 which represents the BST 500 of FIG. 5 after a bounding box entry with a confidence score of 2 has been added, and the associated array 602 in which the nodes (including the associated bounding box entries) are stored.

When the bounding box entries are stored in a BST structure, adding a new bounding box entry when N bounding box entries have already been stored in memory (i.e., block 412 of the method 400 of FIG. 4) may comprise (i) identifying the bounding box entry with the smallest confidence score and its location in the memory; (ii) removing the identified bounding box entry from the BST by updating the pointers or links of the BST; (iii) storing the new bounding box entry in the identified location; (iv) identifying the position of the new bounding box entry within the BST; and (v) updating the pointers or links of the BST to reflect the determined position of the new bounding box entry.

The bounding box entry with the smallest confidence score may be identified by analysing the links or pointers of the BST. Specifically, the links of the BST are followed to find the left-most node in the BST. Specifically, the root node of the BST may be set as the test node. It is then determined whether the test node of the BST has a left child node (step (a)). If the test node does not have a left child node, then the test node is identified as the left-most node (step (b)). If, however, the test node has a left child node then the left child node becomes the test node (step (c)) and steps (a) to (c) are repeated.

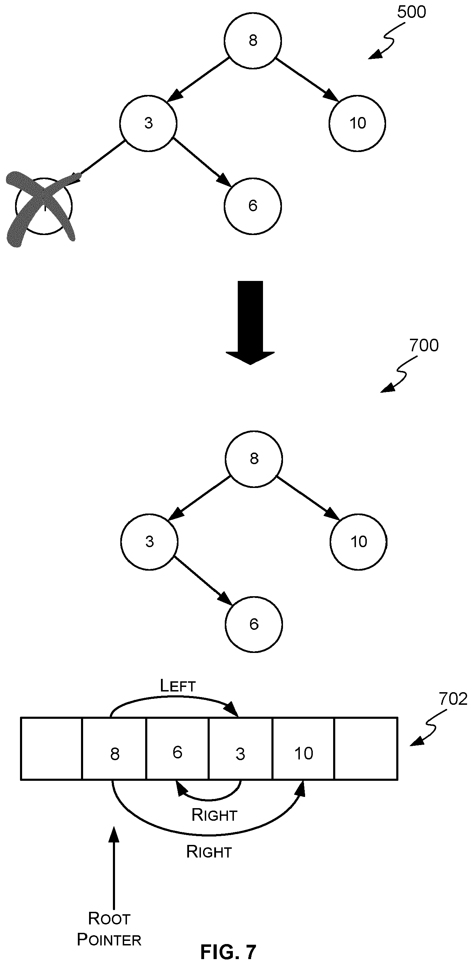

Once the left-most node is identified, the left-most node is removed from the BST by replacing the left-most node in the BST with its right child node. This may be implemented by updating the left child pointer of the parent of the left-most node to point to the right child of the left-most node. If the left-most node is a leaf node, then its right child is NULL thus the left node is removed from the BST by setting the left child pointer of its parent to NULL. For example, in the example BST 500 of FIG. 5, the node with a confidence score of 1 is the left-most node and this node can be removed from the BST 500 by setting the left node of its parent (the node with a confidence of 3) to the right node of the left-most node (i.e., NULL). This is illustrated in FIG. 7. Specifically, FIG. 7 shows at 700 the BST 500 of FIG. 5 after the left-most node (the node with a confidence score of 1) has been removed, and the associated array 702 in which the nodes (and associated bounding box entries) are stored.

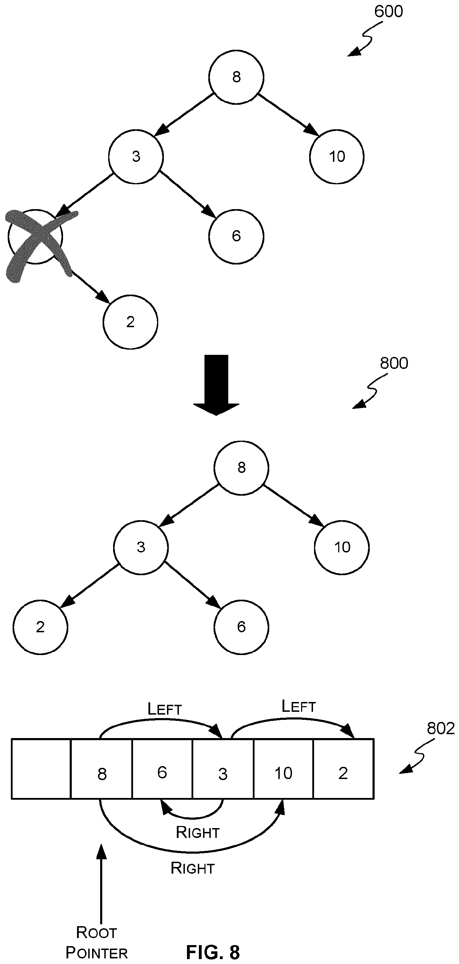

If, however, the left-most node is not a leaf node - which means the right child node of the left-most node is not NULL (it cannot have a non-NULL left child node if it is the left-most node) - then the left-most node is removed from the BST by updating the left-child node pointer of its parent to point to the right child node of the left-most node. For example, in the example BST 600 of FIG. 6, the node with a confidence score of 1 is the left-most node and this node can be removed from the BST 600 by replacing this node in the BST with its right child node (the node with a confidence score of 2) by setting the left child node pointer of its parent (the node with a confidence score of 3) to point to its right child (the node with a confidence score of 2). This is illustrated in FIG. 8. Specifically, FIG. 8 shows at 800 the BST 600 of FIG. 6 after the left-most node (the node with a confidence score of 1) has been removed, and the associated array 802 in which the nodes (and associated bounding box entries) are stored.

Steps (iii), (iv) and (v) for adding a new bounding box entry when N bounding box entries have already been stored are the same as steps (i), (ii) and (iii) described above for adding a new bounding box entry when less than N bounding box entries have been stored except the new bounding box entry is not stored in the next available memory position or location.

As described above, in some cases, instead of analysing the bounding box entries to identify the minimum confidence score of the bounding box entries each time a bounding box with a confidence score that meets the confidence score threshold is identified, a current lowest confidence score record may be maintained that indicates the current lowest confidence score of the bounding box entries. The current lowest confidence score record may be updated each time a new bounding box entry is to be added. Then, when a bounding box with a confidence score that meets the confidence score threshold is identified, the confidence score of the identified bounding box may be compared to the current lowest confidence score record to determine if a bounding box entry is to be added for the bounding box. In some cases, when the bounding box entries are stored in a BST structure, the current lowest confidence score record may be updated as part of the process of identifying the left-most node (i.e., identifying the node or bounding box entry with the lowest confidence score).

For example, in some cases, identifying the left-most node (i.e., identifying the node associated with the bounding box entry with the lowest confidence score) may comprise first determining if the root of the BST is the left-most node (i.e. its left node is NULL). If it is determined that the root of the BST is the left-most node, then the right child node of the root is made the root. This may be implemented by updating the root pointer to point to that right child node. The left-most node of the new root is then identified and the current lowest confidence score record is updated to be the lower of the confidence score of the identified left-most node and the confidence score of the new bounding box entry to be added. If, however, the root of the BST is not the left-most node then the left-most node of the BST and its parent are identified (e.g. as described above). The left-most node may then be removed from the BST (e.g. as described above). Then the left-most node starting from the identified parent node is identified. This is the node in the updated BST (the BST without the node associated with the previous lowest confidence score) that is associated with the new lowest confidence score. The current lowest confidence score record is then updated to be the lower of the confidence score associated with the identified left-most node and the confidence score of the new bounding box entry to be added.

Identifying the new lowest confidence score (after the bounding box entry with the lowest confidence score is removed) as part of identifying the bounding box entry with the lowest confidence score means that the whole BST does not have to be analysed twice - once to identify the bounding box entry with the lowest confidence score and once to identify the new lowest confidence score. Specifically, the node with the next lowest confidence score will be at the same level or at a lower level in the tree than the parent of the node with the current lowest confidence score, thus one only has to analyse the nodes in the BST above the parent node of the node with the current lowest confidence score once. For example, to identify the bounding box entry with the lowest confidence score in the BST 600 of FIG. 6 one need to assess the head node (the node with a confidence score of 8), the first left child-node (the node with a confidence score of 3), and the next left child node (the node with a confidence score of 1). Once the node with the lowest confidence score is removed (node with a confidence score of 1) to determine the new lowest confidence score, instead of starting at the root node, the assessment is started at the node with a confidence of 3. Depending on the depth of the tree and how balanced the tree is, this can significantly reduce the number of bounding box entries that are read and assessed.

A sorted list of bounding box entries stored in a BST data structure (e.g. block 418 of the method 400 of FIG. 4) may be generated by executing an in order traversal algorithm which may also be referred to as left-node-right or left-root-right traversal. A person of skill in the art would be able to implement an in order traversal algorithm to output the nodes of a BST in order. The in order traversal may be implemented by (i) traversing the left sub-tree, recursively; (ii) traversing the root node; (iii) traversing the right subtree recursively. Traversing a tree recursively from a node can be implemented by calling a function, (e.g. InOrder), which receives a node identifier X. In the function, if the node X is null then the function ends. If the node X is not null, then the function calls the function InOrder with the node's left node (X.left). The function then outputs the data for the current node X. The function then calls the function InOrder with the node's right node (X. right). It can be seen that the method starts with the left sub-node of the root then recursively calls the function InOrder with that node's left node. This means you continue to go left in the sub-tree until you hit a NULL left-node indicating that you have identified the left-most node. Once the left-most node is reached then the method returns to the previous call and the data associated with the parent node (the parent of the NULL) is printed or output. Then the function InOrder is called with that node's right node which will continually go left from there until a NULL is reached. It will be evident to a person of skill in that art that this is an example only and in other examples this may be implemented iteratively.

The BST structure is an efficient data structure for storing the bounding box entries. Specifically, storing the bounding box entries in a BST structure, can, compared to other data structures, significantly reduce (i) the amount of data that has to be read to identify the bounding box entry with the lowest confidence score; (ii) the amount of data that has to be read to determine the position of a new bounding box entry in the structure; and (iii) the amount of data that has to be written to add a new bounding box entry to the structure. Points (i) and (ii) are particularly true when the binary tree is relatively balanced. Specifically, only one bounding box entry has to be read from each level of the tree to identify the bounding box entry with the lowest confidence score, and so when the tree is balanced this is only a fraction of the bounding box entries. More specifically, if the binary tree is balanced and there are N bounding box entries then only log2(N) bounding box entries are read and analysed. For SSD-ResNet34 the default N is 200 thus when the binary tree is balanced then a maximum of log2(200)=8 bounding box entries are read and analysed. In contrast, if the bounding box entries were stored in a singly linked list structure in which the bounding boxes are linked in descending order, each node and each bounding box entry has to be read to identify the bounding box entry with the lowest confidence score. Furthermore, since the order or position of the bounding box entries in the BST is maintained via links or pointers the data that is written to update the BST after a new bounding box entry is added is minimized.

Min Heap Structure

In other examples, the bounding box entries may be stored in a min heap structure. A min heap structure is a type of binary heap structure. A binary heap is a binary tree in which the parent and child relationships are fixed. Specifically, the left child node of a node at position i is always at position 2(i)+1 and the right child node of node i is always at position 2(i)+2. The root of the tree is always at position 0 thus its left child node is at position 1 and its right child node is at position 2. Similarly the parent of a node at position i is at position (i-1)/2. Thus, unlike a BST structure, links or pointers between the nodes are not stored for a binary heap.

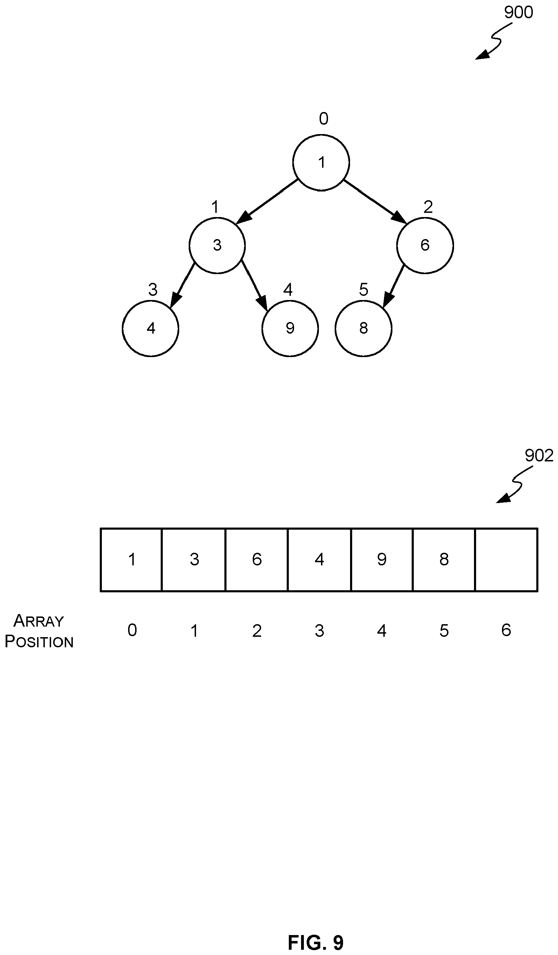

A binary heap may either be a min heap or a max heap. In a min heap the node with the minimum key in the tree is stored at the root and child nodes have a larger key than their parent. In a max heap the node with the maximum key in the tree is stored at the root and the child nodes have a smaller key than their parent. Reference is now made to FIG. 9 which illustrates an example min heap 900 and an array 902 in which the nodes of the min heap 900 are stored. Each node is shown as a circle. The key of each node is shown within the node and the value outside the node indicates the position of the node in the array. For example, the root node has a key of 1 and is stored at position 0 of the array, the left child node of the root node has a key of 3 and is stored at position 1 of the array, the right child node of the root node has a key of 6 and it is stored at position 2 of the array and so on. It can be seen in this example that the node with the lowest key is the root node, and all child nodes have a higher key than their parent.

To store the bounding box entries in a min heap there is node for each bounding box entry that comprises information identifying the associated bounding box entry. The confidence score of the associated bounding box entry is the key of the node. The nodes may be stored in an intrusive or non-intrusive data structure. When the nodes are stored in an intrusive data structure the data (e.g. the bounding box entry) associated with the node is stored within the node, and when the nodes are stored in a non-intrusive data structure the data (e.g. the bounding box entry) associated with the node is not stored within the node, and instead the node comprises a link or pointer to the associated data (e.g. bounding box entry).

Each node is stored in a position in memory that reflects the position of the associated bounding box entry within the min heap structure. Since a min heap structure does not require pointers to related node/entries, storing the bounding box entries in a min heap structure requires less memory than storing the bounding box entries in a BST structure or another structure that stores pointers to other nodes. Specifically, storing the bounding box entries in a min heap structure reduces the amount of memory relative to storing the bounding box entries in a BST structure by N*2*(pointer size in bytes) bytes of memory; and reduces the amount of memory relative to storing the bounding box entries in a singly linked list data structure by N*(pointer size in bytes) bytes of memory.

When the bounding box entries are stored in a min heap structure bounding box entries are added and removed in a manner that maintains the min heap structure.

Specifically, when the bounding box entries are stored in a min heap structure, adding a new bounding box entry, when there are less than N bounding box entries (e.g. block 408 of the method 400 of FIG. 4), may comprise allotting or allocating the node associated with the new bounding box entry the next available position in memory (e.g. in the array) and then bubbling the new node up through the min heap structure. The bubbling up of the new node may be implemented by recursively comparing the confidence score of the new node to the confidence score of its parent. If the confidence score of the new node is less than the confidence score of its parent, then the parent is moved to the position currently allotted to the new node and the new node is allotted the parent position. If the confidence score of the new node is greater than the confidence score of the parent, then the new node is stored at the allotted position. Where the nodes are stored in an intrusive data format this may comprise storing the new bounding box entry at the allotted position as part of the node.

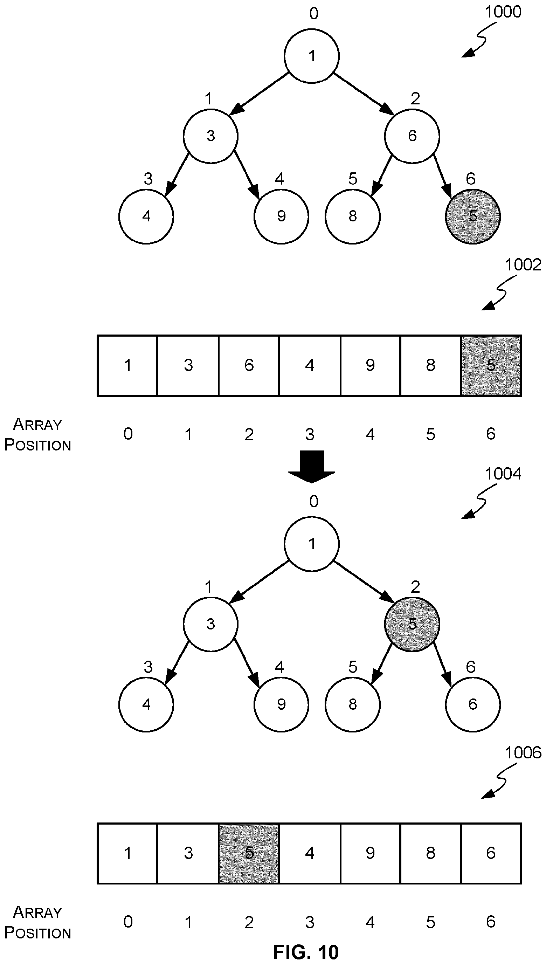

For example, let the nodes of the min heap 900 of FIG. 9 be associated with bounding box entries and the nodes are stored in an array 902 and the key shown in FIG. 9 represents the confidence score associated with the node. If a new bounding box entry with a confidence score of 5 is to be added to the min heap 900 then a new node associated with the new bounding box entry is initially allotted the next free position in the array, which is position 6. Such a min heap is shown at 1000 and the associated array is shown at 1002 of FIG. 10. The parent of position 6 is the node at position 2 which has a confidence score of 6. The confidence score (5) of the new node is less than the confidence score (6) of its parent thus the parent is moved to position 6 - i.e., the data defining the node at position 2 is written to position 6 - and the new node associated with the new bounding box entry is allotted position 2. Such a min heap is shown at 1004 and the associated array is shown at 1006 of FIG 10. The parent of the node at position 2 is the node at position 0, which has a confidence score of 1. The confidence score (5) of the new node is greater than the confidence score (1) of its parent, so the data defining the new node (e.g. information identifying the bounding box entry - e.g. a pointer to the new bounding box entry or the bounding box entry itself) is written to position 2 of the array. Only writing the information for the new node to memory after its position within the min heap has been finalised can save writing the information for that new node to memory several times as it is bubbled up through the min heap structure.

When the bounding box entries are stored in a min heap structure, removing the bounding box entry with the smallest confidence score and adding a new bounding box entry, when there are already N bounding box entries (e.g. block 412 of the method 400 of FIG. 4), may comprise allotting the new node associated with the new bounding box entry the root position (i.e., position 0) and bubbling the new node down through the min heap structure. Since the node at the root position was the node associated with the lowest confidence score, this removes the bounding box entry with the lowest confidence score. The bubbling down of the new node through the min heap structure may be implemented by recursively comparing the confidence score of the new node to the confidence scores of its children. If the confidence score is greater than at least one of its children, the child with the smallest confidence score is moved to the position currently allotted to the new node and the new node is allotted the position of that child. If, however, the confidence score of the new node is less than all of its children then the new node is stored at the allotted position. Where the nodes are stored in an intrusive data structure this may comprise storing the new bounding box entry at the allotted position, and where the nodes are stored in a non-intrusive data structure this may comprise storing the new bounding box entry elsewhere in memory and storing a link to that bounding box entry in the allotted position.

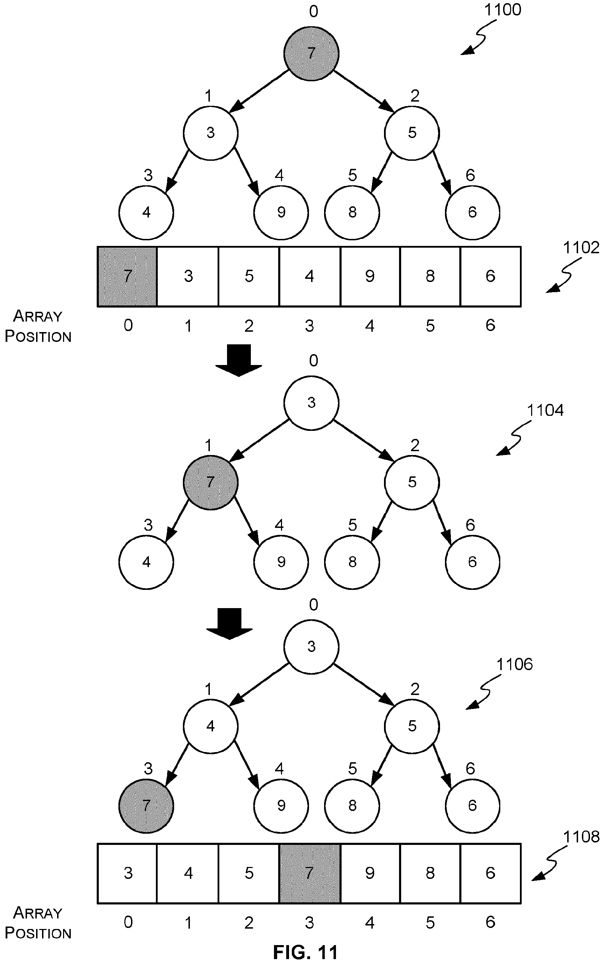

For example, let the nodes of the min heap 1004 of FIG. 10 be associated with bounding box entries and be stored in an array 1006, wherein the key of the nodes represents the confidence score of the associated bounding box entry. The min heap 1004 of FIG. 10 has the maximum number of nodes/entries - i.e. 7. If it is determined that a new bounding box entry with a confidence score of 7 is to be added to the min heap 1004 then a new node associated with the new bounding box entry is initially allotted the root position in the array, which is position 0. Such a (temp) min heap is shown at 1100 and the associated array is shown at 1102 of FIG. 11. The children of the node at position 0 are the nodes at positions 1 and 2 and have confidence scores of 3 and 5 respectively. The confidence score (7) of the new node is greater than the confidence score (3, 5) of at least one of its children so the child with the smallest confidence score (the child at position 1) is moved to the root position - i.e., the information defining the node currently at position 1 is written to position 0 - and the new node is allotted position 1. Such a (temp) min heap is shown at 1104 of FIG 11. The children of the node at position 1 are the nodes at positions 3 and 4 and have confidence scores of 4 and 9 respectively. The confidence score (7) of the new node is greater than the confidence score (4) of at least one of its children (the child node at position 3), so the child with the smallest confidence score (the child node at position 3) is moved to position 1 and the new node is allotted position 3. The node at position 3 does not have any children so the information defining the new node (e.g. the information identifying the associated bounding box entry - which may be the bounding box entry or a pointer to the bounding box entry) is written to position 3. The final min heap is shown at 1106 and the associated array is shown at 1108 of FIG. 11. Only writing the information for the new node to memory after its position within the min heap has been finalised can save writing the information for that new node to memory several times as it is bubbled down through the min heap.

In some cases, instead of maintaining a min heap structure from the beginning, the first N bounding box entries that are added may simply be stored in memory in the order in which they are added (e.g., as an unsorted array). Then, once N bounding boxing entries have been added, a heapify operation may be performed on the stored bounding box entries to put them in a min heap structure, then the min heap structure may be maintained each time a new bounding box entry is added.

Generating a sorted list of bounding box entries stored in a min heap structure (e.g. block 418 of the method 400 of FIG. 4) comprises repeatedly removing the node with the smallest confidence score (i.e. the head node) from the min heap structure. Removing the bounding box entry with the smallest confidence score from the min heap structure may comprise outputting the bounding box entry associated with the root node of the min heap (e.g. at position 0 of the memory), replacing the root node with the last node in the min heap structure (e.g. by allotting the last node in the min heap structure position 0 of the min heap structure) and then bubbling the former last node down through the min heap structure until the min heap property is satisfied. As described above, bubbling a node at the root down through a min heap structure may be implemented by recursively comparing the confidence score of the node to the confidence scores of its children. If the confidence score is greater than at least one of its children, the child with the smallest confidence score is moved to the position currently allotted to the former last node and the former last node is allotted the position of that child. If, however, the confidence score of the former last node is less than all of its children then the node is stored at the allotted position. Thus bubbling down is a O(log2(N)) operation.

The min heap data structure is an efficient data structure for storing the bounding box entries. Specifically, storing the bounding box entries in a min heap data structure, can, compared to other data structures, significantly reduce (i) the amount of data that has to be read to identify the bounding box entry with the lowest confidence score; (ii) the amount of data that has to be read to determine the position of a new bounding box entry in the structure; and (iii) the amount of data that has to be written to add a new bounding box entry to the structure. Specifically, the node associated with the bounding box entry with the lowest confidence score will always be kept at position 0, thus no data needs to be read to identify the bounding box entry with the lowest confidence score. As noted above, maintaining a min heap structure has a complexity of $O(\log_2(N))$.

Although a BST data structure has been described as having explicit links or pointers, in other examples a BST data structure may have implicit links based on where the nodes are stored in memory such as the min heap structure described above. Similarly, although the min heap data structure has been described above as having implicit links or pointers based on where the nodes are stored in memory, in other examples a min heap structure may have explicit links or pointers.

Test Results

Testing has shown that implementing SSD post processing in accordance with the method of 400 of FIG. 4 can significantly reduce the memory required to implement the SSD post processing and the time to execute or perform the SSD-post processing relative to implementing SSD post processing in the standard manner.

Reference is now made to FIG. 12 which illustrates the number of clock cycles to perform or execute, using a micro-controller, SSD post processing on the output of an SSD-ResNet34 neural network with N=200 for a single class (55) for an image (000000451150.jpg) from COCO2017 relative to the number of bounding boxes that meet the confidence score threshold via (i) the standard implementation wherein the list of bounding boxes that meet the confidence score threshold are sorted using the std::Sort sorting technique (this is shown at 1202); (ii) the method 400 of FIG. 4 when the bounding box entries are stored in a BST structure (shown at 1204); and (iii) the method 400 of FIG. 4 when the bounding box entries are stored in a min heap structure (shown at 1206). As is known to those of skill in the art, std::Sort is a sorting function on the C++ standard library. In the worst case std::Sort has a complexity of $O(N*\log(N))$.

It can be seen from FIG. 12 that the method 400 of FIG. 4 (both the BST and min heap implementations) are comparable to the standard implementation when the number of bounding boxes that meet the confidence score threshold is low (<1000), but the method 400 of FIG. 4 (both the BST and min heap implementations) perform the SSD post processing significantly faster than the standard method as the number of bounding boxes that meet the confidence score threshold increases. Specifically, the time to perform the SSD post processing using the standard implementation increases linearly as the number of bounding boxes that meet the confidence score threshold increases whereas the time to perform the SSD post processing using the method 400 of FIG. 4 (both the BST and min heap implementations) increases logarithmically as the number of bounding boxes that meet the confidence score threshold increases.

Reference is now made to FIG. 13 which shows (ii) and (iii) above in greater detail.

It can be seen from FIG. 13 that when the number of bounding boxes that meet the confidence score threshold is greater than ~800 the min heap implementation of the method 400 of FIG. 4 performs slightly better than the BST implementation of the method 400 of FIG. 4. It can also be seen from FIG. 13 that when the number of bounding boxes that meet the confidence score threshold is less than ~800 the BST implementation of the method 400 of FIG. 4 performs slightly better than the min heap implementation. However, the tests were run using a min heap implementation in which the min heap structure is maintained throughout, and it is expected that the performance of the min heap implementation may be improved over this lower range (number of bounding boxes that meet the confidence score threshold is less than ~800) by only maintaining a min heap structure after N bounding box entries have been added as described above.

Method of Implementing SSD Neural Network

As described above, the method 400 of FIG. 4 can be used to efficiently implement SSD post processing, on a micro-controller embedded within a neural network accelerator. An example of such an NNA is described below with respect to FIG. 15. Using the method 400 of FIG. 4 to implement the SSD post processing allows the SSD neural network to be implemented by the hardware accelerators of the NNA and the post processing to be implemented by the micro-controller of the NNA which allows the main processor (e.g. CPU) of the system to offload the SSD post processing to the micro-controller which both (i) allows the main processor (e.g. CPU) to use its resources to perform another task and (ii) reduces the amount of data that has to be output from the NNA for an image. Specifically, the output of the SSD neural network generated by the hardware accelerators of the NNA can be provided to the micro-controller via internal paths within the NNA which allows the output of the SSD neural network to be culled by the post processing before being output from the NNA.

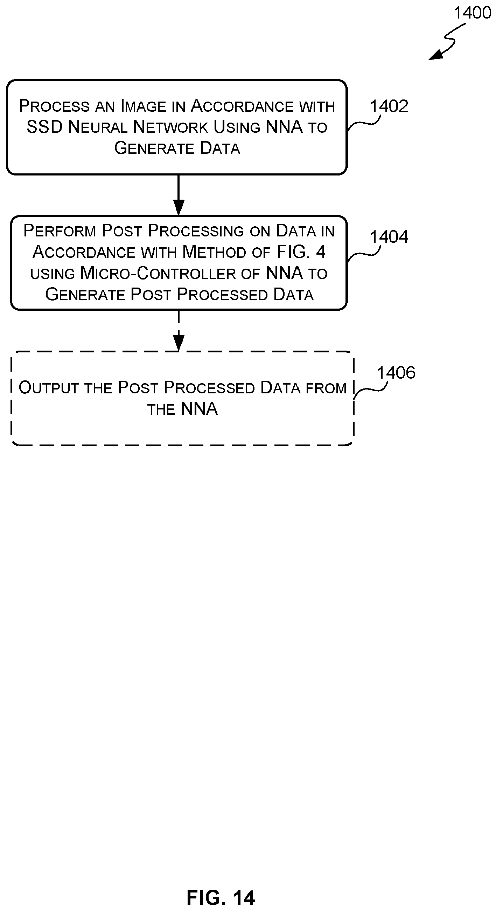

Reference is now made to FIG. 14 which illustrates an example method 1400 of implementing an SSD neural network using a computing system that comprises a neural network accelerator with one or more hardware accelerators that are configured to accelerate one or more network operations, and an embedded micro-controller. The method 1400 begins at block 1402 where an image is processed in accordance with the SSD neural network using the hardware accelerators and/or the micro-controller of the NNA to generate output data. As described above, this output data comprises information defining each of a plurality of bounding boxes in the image and a confidence score for each bounding box of the plurality of bounding boxes for one or more classes. Once the output data for the image has been generated the method 1400 proceeds to block 1404.

At block 1404, SSD post processing is performed on the data generated in block 1402 in accordance with the method 400 of FIG. 4 using the micro-controller of the NNA to generate post processed data. The post processed data may comprise the sorted list of the top N bounding box entries generated at block 418 of the method 400 of FIG. 4 or the post processed data may comprise a sorted list of bounding box entries after NMS has been performed thereon (e.g. when the NMS is performed by the micro-controller of the NNA). The method 1400 may end or the method 1400 may proceed to block 1406.

At block 1406, the post processed data generated in block 1404 is output from the NNA. The method 1400 then ends.

NNA

Reference is now made to FIG. 15 which illustrates an example NNA 1500 which may be used to implement the method 400 of FIG. 4 and/or the method 1400 of FIG. 14.

The neural network accelerator 1500 comprises a hardware pipeline 1502, an embedded micro controller 1504, a memory interface 1506 and a command decoder 1508.

The hardware pipeline 1502 comprises an input unit 1510, a plurality of hardware accelerators 1512, 1514, 1516, 1518, an output unit 1520 and interconnection hardware 1522. The hardware pipeline 1502 is configured to receive input data (an input tensor), process the input data (input tensor) using one or more of the hardware accelerators 1512, 1514, 1516, 1518 to generate output data (an output tensor), and output the output data (output tensor). The input data (input tensor) may represent all or a portion of the input data to a layer of a neural network. The receiving of input data at the hardware pipeline 1502 and processing it using one or more hardware accelerators is referred to as a hardware pass of the hardware pipeline. It may take one or more hardware passes of the hardware pipeline to implement a neural network. For example, in a first hardware pass input data may be input to the hardware pipeline 1502 for processing in accordance with a convolution layer by the convolution accelerator 1512, and then the output of the first hardware pass may be input to the hardware pipeline 1502 in a second hardware pass and processed in accordance with a pooling layer by the pooling accelerator 1516. A neural network may be mapped to hardware passes of the hardware pipeline 1502 in any suitable manner.

The input unit 1510 is hardware configured to receive and store the input data to the hardware pipeline 1502. The input data may be received from external memory (i.e., memory external to the NNA 1500) via the memory interface 1506. In some examples, the input unit 1510 may comprise one or more buffers to store the received input data. Although the example hardware pipeline 1502 of FIG. 15 comprises a single input unit 1510, other example hardware pipelines may comprise multiple input units. The term "input data to the hardware pipeline" is used herein to mean the input data to be processed by one or more accelerators (which may or may not be equivalent to the input data to a layer of a neural network) and may be distinguished from other parameters used in a neural network such as weights, biases, etc. In some cases, the other input parameters may be input to the hardware pipeline in another manner (e.g. loaded into an internal or external storage unit associated with a specific accelerator). For example, the weights and biases for a convolution layer may be loaded into a buffer linked to, or forming part of, the convolution accelerator 1512.

Each hardware accelerator 1512, 1514, 1516, 1518, is designed to accelerate one or more neural network operations. Specifically, each hardware accelerator 1512, 1514, 1516, 1518 is configured to receive an input tensor and perform, via hardware logic, one or more operations on the input tensor to generate an output tensor. The hardware pipeline 1502 of FIG. 15 comprises a convolution accelerator 1512, an element-wise operations accelerator 1514, a pooling accelerator 1516 and an activation accelerator 1518. However, this is just an example set of hardware accelerators and other hardware pipelines may have additional hardware accelerators, fewer hardware accelerators and/or different hardware accelerators depending, for example, on the type of neural networks they are intended to process. In some cases, one or more of the hardware accelerators of FIG. 15 may be combined.

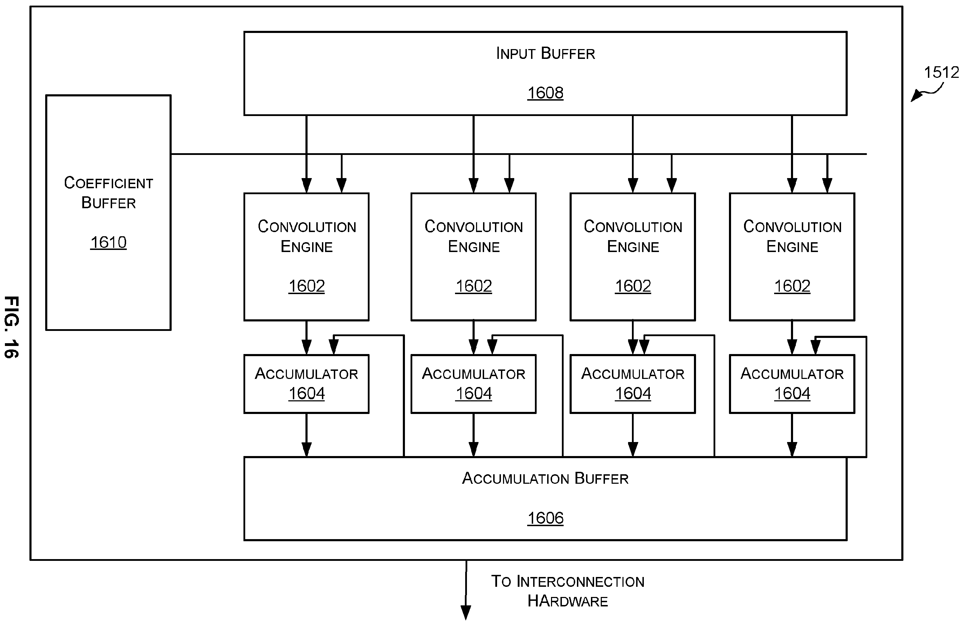

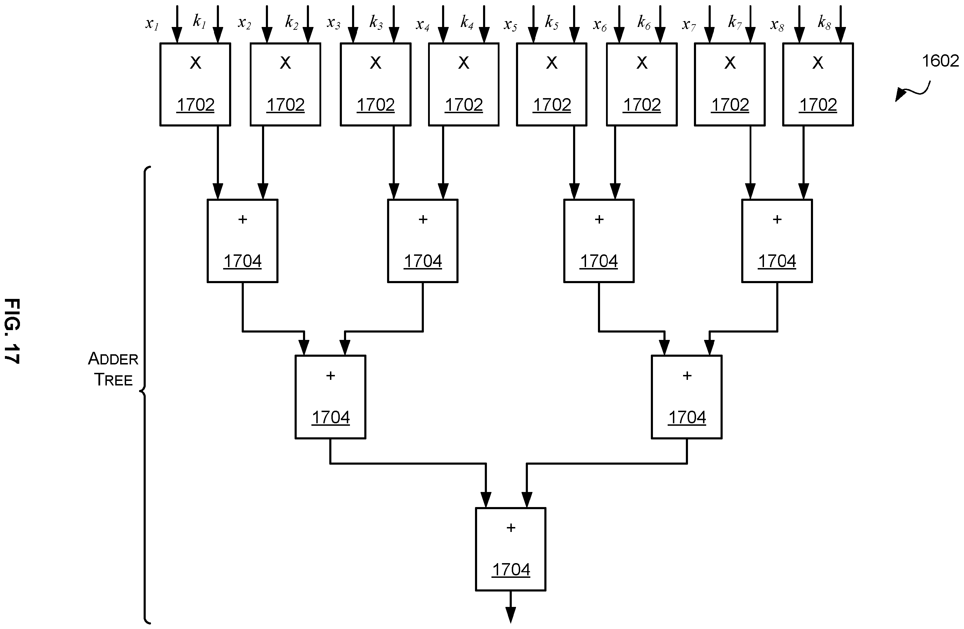

The convolution accelerator 1512 is hardware configured to accelerate convolution operations. An example implementation of a convolution accelerator 1512 is described with respect to FIGS. 16 and 17.

The element-wise operations accelerator 1514 is hardware configured to receive input data (e.g. an input tensor) and perform an element-wise operation on the input data (e.g. input tensor), optionally with another data set (e.g. another tensor which may be referred to as the secondary input tensor) which may be obtained or retrieved from external memory (e.g. memory external to the NNA) via the memory interface 1506. An element-wise operation is a same operation that is performed on each element of the input data/tensor (e.g. each input data value or each tensel). Element-wise operations which may be performed on the input data include, but are not limited to, add, multiply, maximum, and minimum.

The other data set/tensor may be the same size (e.g. have the same dimensions) as the input data/tensor such that corresponding elements of the two tensors are combined using an element-wise operation. Alternatively, the other data set/tensor and the input data/tensor may have a different size or dimensions. If, for example, the mismatching dimension of one of the tensors is of size 1, an element-wise operation may be performed between the input data/tensor and the other data set/tensor using a broadcast technique wherein the smaller tensor is broadcast (or expanded) to the size of the other tensor. For example, a tensor of size [N, H, W, C] = [1, 10, 1, 10] can be combined element-wise with a tensor of size [N, H, W, C] = [1, 10, 10, 10] by expanding the W dimension of the first tensor.

The pooling accelerator 1516 is hardware configured to accelerate pooling operation operations such as, but not limited to, max, min and average. The activation accelerator 1518 is hardware configured to accelerate non-linear operations such as, but not limited to, ReLU and LReLU.

The output unit 1520 is hardware configured to receive the output tensor generated by processing the input data via one or more accelerators 1512, 1514, 1516, 1518. In some cases, the output unit 1520 may have a buffer or other storage for temporarily storing all or a portion the output tensor prior to outputting the output tensor from the hardware pipeline. In some cases, the output unit 1520 may be configured to save the output tensor in external memory (i.e., memory that is external to the neural network accelerator) via the memory interface 1506.

The interconnection hardware 1522 statically or dynamically connects the input unit 1510, one or more hardware accelerators 1512, 1514, 1516, 1518, and the output unit 1520 to allow input data to the hardware pipeline 1502 to flow through (e.g. be processed by) one or more accelerators and then be output from the hardware pipeline 1502. In some cases, the interconnection hardware 1522 may comprise fixed hardware connections between the input unit 1510, the hardware accelerators 1512, 1514, 1516, 1518 and the output unit 1520 that allow data to flow through the input unit 1510, the hardware accelerators 1512, 1514, 1516, 1518 and the output unit 1520 in a limited number of ways. However, in other cases, the interconnection hardware 1522 may comprises hardware that can dynamically connect the input unit 1510, the hardware accelerators 1512, 1514, 1516, 1518 and the output unit 1520 in a plurality of different ways in response to one or more control signals.

For example, the interconnection hardware 1522 may comprise a crossbar and the input unit 1510, the hardware accelerators 1512, 1514, 1516, 1518 and the output unit 1520 may be connected to the crossbar in such a manner that the crossbar can dynamically connect the input unit 1510, the hardware accelerators 1512, 1514, 1516, 1518 and the output unit 1520 in a plurality of different ways in response to one or more control signals. For example, in one hardware pass of the hardware pipeline 1502 the crossbar may connect the output of the input unit 1510 to the input of the convolution accelerator 1512, connect the output of the convolution accelerator 1512 to the input of the element-wise operations accelerator 1514, and then connect the output of the element-wise operations accelerator 1514 to the input of the output unit 1520 so that the input data for the hardware pass is processed by the convolution accelerator 1512 then the element-wise operations accelerator 1514. In another hardware pass, the crossbar may connect the output of the input unit 1510 to the input of the convolution accelerator 1512, and the output of the convolution accelerator 1512 to the input of the output unit 1520 so that the input data for the hardware pass is processed only by the convolution accelerator 1512. Accordingly, in these cases the connections between the input unit 1510, the hardware accelerators 1512, 1514, 1516, 1518 and the output unit 1520 (and thus the manner in which data may flow through the input unit 1510, the hardware accelerators 1512, 1514, 1516, 1518 and the output unit 1520) are not fixed or static.

The embedded micro-controller 1504 can execute instructions of a program to perform operations on data input to the embedded micro-controller 1504. The embedded micro-controller 1504 may be able to receive data from external memory via the memory interface 1506 or from the hardware pipeline 1502 via internal paths. For example, in some cases the output unit 1520 of the hardware pipeline 1502 may be able to write data to internal memory 1524 of the NNA, via the memory interface 1506, which the embedded micro-controller 1504 has access to.

The command decoder 1508 controls the operation of the other components of the NNA 1500. Specifically the command decoder receives a set of commands indicating which data is to be input to the NNA and which components are to process the NNA and how, and then sends command or control information to the appropriate components so that the input data will be processed using the desired components in the desired manner. For example, the command decoder 1508 may, for each hardware pass of the hardware pipeline 1502, (i) send command or control information to the interconnection hardware 1522 indicating which accelerators are to be active or used in the hardware pass which causes the interconnection hardware 1522 to connect the input unit, the active accelerators, and the output unit in the desired manner, and (ii) send information to each active accelerator indicating that it is to be active in the hardware pass and how it should be configured in that hardware pass which causes the accelerator to perform a desired operation on the data input to that accelerator. The command or control information may also indicate other information such as the formats of the input and data of the active accelerators. Where the embedded micro-controller 1504 is to be used to process data the command decoder 1508 may be configured to cause the micro-controller to execute a program of a plurality of programs. For example, where the embedded micro-controller 1504 is to be used to perform SSD post processing, the command decoder 1508 may cause the embedded micro-controller 1504 to execute a program which causes the embedded micro-controller to execute the method 400 of FIG. 4.

Testing has shown that when the embedded micro-controller of an NNA such as the NNA of FIG. 15 performs SSD post-processing in accordance with the method 400 of FIG. 4, the micro-controller does not become the bottleneck of the NNA.

Reference is now made to FIG. 16 which illustrates an example implementation of the convolution accelerator 1512 of FIG. 15. In this example, the convolution accelerator 1512 comprises a plurality of convolution engines 1602, a plurality of accumulators 1604 and an accumulation buffer 1606.

Each convolution engine 1602 comprises hardware logic configured to receive a set of weights $\{k_1, k_2 ..., k_8\}$ that represent all or a portion of a filter, and a set of input data values $\{x_1, x_2, ..., x_8\}$ that represent all or a portion of a window of the input data, and perform a multiply-accumulate calculation on the received weights and input data values. In some examples, as shown in FIG. 17, each convolution engine 1602 may comprise a plurality of multipliers 1702, each of which is configured to multiple a weight $(k_i)$ and a corresponding input data value $(x_i)$ to produce a multiplication output value. The multipliers 1702 are followed by a plurality of adders 1704. The adders may form an adder tree to calculate the sum of the multiplication outputs. In the example of FIG. 17 the convolution engine 1602 comprises eight multipliers 1702, but in other examples there may be more or fewer multipliers. For example, in some cases there may be 128 multipliers. Generally, if there are Z multipliers, the adder tree comprises Z-1 adders. The example convolution accelerator 1512 of FIG. 16 comprises four convolution engines 1602, however, it will be evident to a person of skill in the art that this is an example only and there may be only one convolution engine, there may be two convolution engines, or there may be more than two convolution engines.

Since it may take more than one hardware pass of the convolution engines 1602 to generate a complete filter result (e.g. because a convolution engine may only receive and process a portion of the weights of a filter and/or a portion of the input data values of a window in a cycle), the convolution accelerator 1512 may comprise a plurality of accumulators 1604. A pass of the convolution engines comprises receiving a set of weights and a set of input data values and performing a multiply-accumulate operation thereon. Each accumulator 1604 receives the output of one convolution engine 1602 and adds the output to previous convolution engine outputs that relates to the same filter. Since a convolution engine 1602 may not generate or produce outputs that relate to the same filter in consecutive cycles the partial results of one or more filters may be stored in an accumulation buffer 1606 and then the appropriate partial results may be provided to the accumulators 1604 each cycle by the accumulation buffer 1606.

In some cases, the convolution accelerator 1512 may comprise or have access to an input buffer 1608 for storing the elements of the input tensor and a coefficient buffer 1610 for storing the weights of the convolution. In some cases the input buffer 1608 may be implemented as a plurality of banks of memory. In these cases, there may be a multiplexor (not shown) for each convolution engine 1602 that is coupled to each bank of the input buffer 1608 to allow the data stored in any of the banks to be selectively directed to any of the convolution engines 1602.

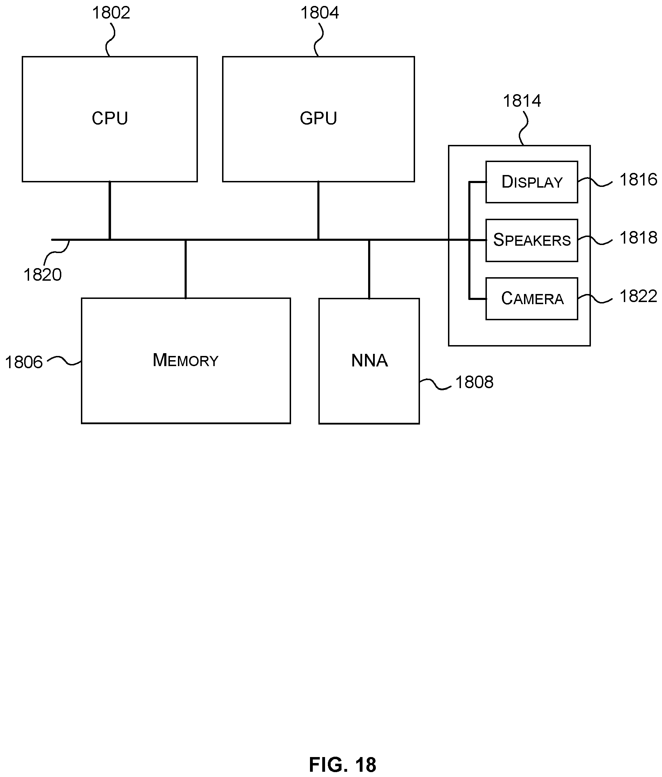

FIG. 18 shows a computer system in which the neural network accelerators described herein may be implemented. The computer system comprises a CPU 1802, a GPU 1804, a memory 1806, a neural network accelerator (NNA) 1808 (which may be the NNA 1500 of FIG. 15) and other devices 1814, such as a display 1816, speakers 1818 and a camera 1822. In other examples, one or more of the depicted components may be omitted from the system. The components of the computer system can communicate with each other via a communications bus 1820.

The neural network accelerator, the convolution accelerator and the convolution engine of FIGS. 15-17 are shown as comprising a number of functional blocks. This is schematic only and is not intended to define a strict division between different logic elements of such entities. Each functional block may be provided in any suitable manner. It is to be understood that intermediate values described herein as being formed by a block need not be physically generated by the block at any point and may merely represent logical values which conveniently describe the processing performed by the block between its input and output.

The neural network accelerators, convolution accelerators and convolution engines described herein may be embodied in hardware on an integrated circuit. The neural network accelerators described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a neural network accelerator configured to perform any of the methods described herein, or to manufacture a computing system comprising any apparatus described herein. An integrated circuit definition dataset may be, for example, an integrated circuit description.

Therefore, there may be provided a method of manufacturing, at an integrated circuit manufacturing system, a neural network accelerator as described herein. Furthermore, there may be provided an integrated circuit definition dataset that, when processed in an integrated circuit manufacturing system, causes the method of manufacturing a neural network accelerator to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

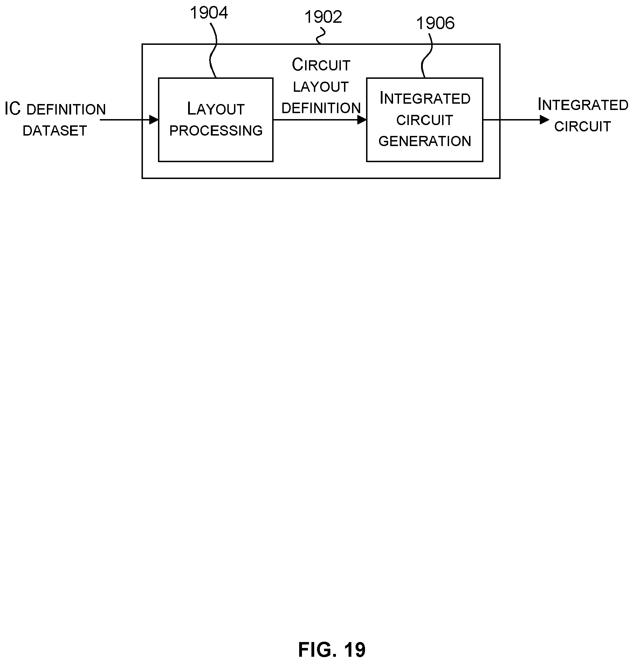

An example of processing an integrated circuit definition dataset at an integrated circuit manufacturing system so as to configure the system to manufacture a neural network accelerator will now be described with respect to FIG. 19.

FIG. 19 shows an example of an integrated circuit (IC) manufacturing system 1902 which is configured to manufacture a neural network accelerator as described in any of the examples herein. In particular, the IC manufacturing system 1902 comprises a layout processing system 1904 and an integrated circuit generation system 1906. The IC manufacturing system 1902 is configured to receive an IC definition dataset (e.g. defining a neural network accelerator as described in any of the examples herein), process the IC definition dataset, and generate an IC according to the IC definition dataset (e.g. which embodies a neural network accelerator as described in any of the examples herein). The processing of the IC definition dataset configures the IC manufacturing system 1902 to manufacture an integrated circuit embodying a neural network accelerator as described in any of the examples herein.

The layout processing system 1904 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1904 has determined the circuit layout it may output a circuit layout definition to the IC generation system 1906. A circuit layout definition may be, for example, a circuit layout description.

The IC generation system 1906 generates an IC according to the circuit layout definition, as is known in the art. For example, the IC generation system 1906 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1906 may be in the form of computer-readable code which the IC generation system 1906 can use to form a suitable mask for use in generating an IC.

The different processes performed by the IC manufacturing system 1902 may be implemented all in one location, e.g. by one party. Alternatively, the IC manufacturing system 1902 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a neural network accelerator without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 19 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 19, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method (400) of performing post processing on data generated by processing an image in accordance with a single-shot detector, SSD, neural network, the data comprising information identifying a plurality of bounding boxes in the image and a confidence score for a class for each bounding box of the plurality of bounding boxes, the method (400) comprising, using one or more processors:

   for each bounding box of the plurality of bounding boxes (402, 414, 416):

   (a) determining if the confidence score for the bounding box meets a confidence score threshold (404),
   (b) in response to determining that the confidence score for the bounding box meets the confidence score threshold, determining if less than a maximum number of bounding boxes entries have been stored in memory, each bounding box entry comprising (i) information identifying a bounding box of the plurality of bounding boxes and (ii) the confidence score of the identified bounding box (406),

(c) in response to determining that less than the maximum number of bounding box entries have been stored in memory, adding a new bounding box entry for the bounding box (408),

(d) in response to determining that the maximum number of bounding box entries have been stored in memory, determining if the confidence score for the bounding box is greater than a lowest confidence score of the bounding box entries (410), and

(e) in response to determining that the confidence score for the bounding box is greater than the lowest confidence score of the bounding box entries, removing the bounding box entry with the lowest confidence score, and adding a new bounding box entry for the bounding box (412); and

once (a) to (e) have been completed for each bounding box of the plurality of bounding boxes, outputting a sorted list of the bounding box entries based on the confidence scores.

2. The method (400) of claim 1, further comprising, in response to determining that the confidence score for the bounding box is greater than the lowest confidence score of the bounding box entries, (i) identifying a new lowest confidence score in the bounding box entries after the bounding box entry with the lowest confidence score has been removed and the new bounding box entry has been added and (ii) storing the new lowest confidence score for use in performing (d) for a subsequent bounding box of the plurality of bounding boxes.

3. The method (400) of claim 1 or claim 2, wherein the bounding box entries are stored in an array with a fixed number of elements.

4. The method (400) of any preceding claim, wherein the bounding box entries are stored in an ordered data structure in which a position of the bounding box entries in the ordered data structure is based on the confidence scores of the bounding box entries.

5. The method (400) of any preceding claim, wherein removing the bounding box entry with the lowest confidence score and adding a new bounding box entry for the bounding box comprises replacing the bounding box entry with the lowest confidence score in memory with the new bounding box entry for the bounding box.

6. The method (400) of any preceding claim, wherein the bounding box entries are stored in a binary search tree structure.

7. The method (400) of claim 6, further comprising storing, for each bounding box entry, a node that comprises a pointer to a left child node, a pointer to a right child node and information identifying the associated bounding box entry.

8. The method (400) of any of claims 1 to 4, wherein, when the number of bounding box entries is less than the maximum number of bounding box entries, the bounding box entries are stored in an unsorted structure, and when the number of bounding box entries is equal to the maximum number, the bounding box entries are stored in a min heap structure.

9. The method (400) of any of claims 1 to 5, wherein the bounding box entries are stored in a singly linked list structure, further comprising storing, for each bounding box entry, a node that comprises a pointer to a node associated with a bounding box entry with a next highest confidence score or a next lowest confidence score, and information identifying the bounding box entry associated with the node.

10. The method (400) of any preceding claim, wherein each bounding box is associated with a unique bounding box identifier and the information in a bounding box entry that identifies a bounding box of the plurality of bounding boxes comprises the unique bounding box identifier for that bounding box.

11. The method (400) of any of claims 1 to 9, wherein the information in a bounding box entry that identifies a bounding box comprises parameters or co-ordinates of that bounding box.

12. The method (400) of any preceding claim, wherein, for each bounding box entry, the information identifying a bounding box and the confidence score are stored in memory such that the information identifying the bounding box is separately accessible from the confidence score.

13. The method (400) of any preceding claim, wherein the one or more processors comprises a micro-controller, wherein the micro-controller is embedded in a neural network accelerator, and wherein the neural network accelerator comprises one or more hardware accelerators for performing neural network operations and the method further comprises processing the image in accordance with the SSD neural network using the one or more hardware accelerators of the NNA to generate the data (1402).

14. A computer system comprising a neural network accelerator comprising an embedded micro-controller, the micro-controller configured to perform the method of any of claims 1 to 12, wherein the neural network accelerator is configured to process the image in accordance with the SSD neural network using one or more hardware accelerators of the neural network accelerator.

15. Computer readable code configured to cause the method of any of claims 1 to 12 to be performed when the code is run on a computer system.

FIG. 1

EP 4 475 090 A1

200

**FIG. 2**

**FIG. 3**

FIG. 4

FIG. 5

600

602

LEFT

LEFT

| 1 | 8 | 6 | 3 | 10 | 2 |

RIGHT

RIGHT

RIGHT

ROOT
POINTER

ARRAY
POSITION

0     1     2     3     4     5

FIG. 6

500

700

702

LEFT

| | 8 | 6 | 3 | 10 | |
|---|---|---|---|---|---|

RIGHT

RIGHT

ROOT
POINTER

**FIG. 7**

FIG. 8

900

0

1

1

3

2

6

3

4

4

9

5

8

902

| 1 | 3 | 6 | 4 | 9 | 8 | |
|---|---|---|---|---|---|---|

ARRAY
POSITION

0 1 2 3 4 5 6

FIG. 9

FIG. 10

FIG. 11

**FIG. 12**

FIG. 13

1400

```
┌─────────────────────────────────────┐
│  PROCESS AN IMAGE IN ACCORDANCE WITH │   1402
│   SSD NEURAL NETWORK USING NNA TO    │
│            GENERATE DATA             │
└─────────────────────────────────────┘
                   │
                   ▼
┌─────────────────────────────────────┐
│  PERFORM POST PROCESSING ON DATA IN  │   1404
│   ACCORDANCE WITH METHOD OF FIG. 4   │
│    USING MICRO-CONTROLLER OF NNA TO  │
│    GENERATE POST PROCESSED DATA      │
└─────────────────────────────────────┘
                   │
                   ▼
┌ ─ ─ ─ ─ ─ ─ ─ ─ ─ ─ ─ ─ ─ ─ ─ ─ ─ ─ ┐
│  OUTPUT THE POST PROCESSED DATA FROM │   1406
│              THE NNA                 │
└ ─ ─ ─ ─ ─ ─ ─ ─ ─ ─ ─ ─ ─ ─ ─ ─ ─ ─ ┘
```

**FIG. 14**

FIG. 15

FIG. 16

FIG. 17

**FIG. 18**

IC DEFINITION DATASET → LAYOUT PROCESSING (1904) → CIRCUIT LAYOUT DEFINITION → INTEGRATED CIRCUIT GENERATION (1906) → INTEGRATED CIRCUIT

1902

**FIG. 19**

Europäisches Patentamt

European Patent Office

Office européen des brevets

# EUROPEAN SEARCH REPORT

Application Number

EP 24 17 8059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANUPREETHAM ANUPREETHAM ET AL: "End-to-End FPGA-based Object Detection Using Pipelined CNN and Non-Maximum Suppression", 2021 31ST INTERNATIONAL CONFERENCE ON FIELD-PROGRAMMABLE LOGIC AND APPLICATIONS (FPL), IEEE, 30 August 2021 (2021-08-30), pages 76-82, XP033985715, DOI: 10.1109/FPL53798.2021.00021 [retrieved on 2021-09-30] * abstract * * figures 1, 2 * * algorithm 2 * * page 77, column 1, paragraph 3 - column 2, paragraph 1 * * page 78, column 1, paragraph 1 - column 2, paragraph 1 * * page 79, column 1, paragraph 2 - column 2, line 4 * * page 81, column 1, paragraph 1 * | 1-7,9-15 | INV. G06V10/82 G06F18/30 G06V10/25 G06V10/20 G06V10/44 G06V10/94 |
| X | US 2022/147748 A1 (NAGORI SOYEB [IN] ET AL) 12 May 2022 (2022-05-12) * figures 1-3, 5-9 * * paragraph [0002] - paragraph [0009] * * paragraph [0042] - paragraph [0043] * * paragraph [0053] - paragraph [0057] * | 1-7,9-15 | TECHNICAL FIELDS SEARCHED (IPC) G06V G06F |
| X | US 11 562 554 B1 (MOHANTY ABINASH [US] ET AL) 24 January 2023 (2023-01-24) * figures 1-13 * * column 4, paragraph 3 - column 6, line 8 * * column 9, paragraph 1 * * column 11, paragraph 2 - column 12, paragraph 4 * * column 14, paragraph 3 * | 1-7,9-15 | |

-/--

The present search report has been drawn up for all claims

| Place of search | Date of completion of the search | Examiner |
|---|---|---|
| The Hague | 25 October 2024 | Konya, Iuliu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 17 8059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/300739 A1 (XIE BIKE [US] ET AL) 22 September 2022 (2022-09-22) <br> * figures 1, 2, 7 * <br> * paragraph [0006] - paragraph [0009] * <br> * paragraph [0021] * <br> * paragraph [0039] - paragraph [0054] * <br> * paragraph [0067] - paragraph [0068] * <br> * paragraph [0083] * <br> - - - - - | 1-7,9-15 | |
| X | US 2021/350161 A1 (MLYNAR JURAJ [GB]) 11 November 2021 (2021-11-11) <br> * figures 1-4, 9, 10 * <br> * paragraph [0007] - paragraph [0008] * <br> * paragraph [0114] - paragraph [0133] * <br> * paragraph [0254] - paragraph [0257] * <br> - - - - - | 1-7,9-15 | |
| A | LIU WEI ET AL: "SSD: Single Shot MultiBox Detector", 17 September 2016 (2016-09-17), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 21 - 37, XP047355246, ISBN: 978-3-540-74549-5 [retrieved on 2016-09-17] <br> * the whole document * <br> - - - - - | 1-15 | TECHNICAL FIELDS SEARCHED (IPC) |

The present search report has been drawn up for all claims

| Place of search | Date of completion of the search | Examiner |
|---|---|---|
| The Hague | 25 October 2024 | Konya, Iuliu |

EPO FORM 1503 03.82 (P04C01)

## ANNEX TO THE EUROPEAN SEARCH REPORT
## ON EUROPEAN PATENT APPLICATION NO.

EP 24 17 8059

This annex lists the patent family members relating to the patent documents cited in  the above-mentioned European search report.
The members are as contained in the European Patent Office EDP file on
The European Patent Office is in no way liable for these particulars which are merely given for the purpose of information.

25-10-2024

| Patent document cited in search report | | Publication date | Patent family member(s) | | Publication date |
|---|---|---|---|---|---|
| US 2022147748 | A1 | 12-05-2022 | NONE | | |
| US 11562554 | B1 | 24-01-2023 | NONE | | |
| US 2022300739 | A1 | 22-09-2022 | CN 115082278 A | | 20-09-2022 |
| | | | TW 202238512 A | | 01-10-2022 |
| | | | US 2022300739 A1 | | 22-09-2022 |
| US 2021350161 | A1 | 11-11-2021 | CN 113496479 A | | 12-10-2021 |
| | | | EP 3882821 A1 | | 22-09-2021 |
| | | | GB 2593462 A | | 29-09-2021 |
| | | | US 2021350161 A1 | | 11-11-2021 |

EPO FORM P0459

For more details about this annex : see Official Journal of the European Patent Office, No. 12/82

**EP 4 475 090 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2308166 A